# EUROPEAN PATENT SPECIFICATION

(11) **EP 3 657 652 B1**
(45) Date of publication and mention of the grant of the patent: **02.06.2021**
(21) Application number: 19211482.5
(22) Date of filing: 26.11.2019
(51) Int. Cl.: H02M 1/00, H02M 7/5387, H02M 7/5395, H02M 3/335

(54) **PHOTOVOLTAIC MODULE**
PHOTOVOLTAIKMODUL
MODULE PHOTOVOLTAIQUE

(30) Priority: 26.11.2018 KR 20180147587
(43) Date of publication of application: 27.05.2020
(73) Proprietor: LG Electronics Inc., SEOUL, 07336 (KR)
(72) Inventor: HAN, Hyeonggu, 08592 Seoul (KR); KIM, Daihyun, 08592 Seoul (KR); YU, Sunho, 08592 Seoul (KR)
(74) Representative: Katérle, Axel

(56) References cited:
- JP-A- H06 245 538
- JP-A- 2011 109 739
- JP-A- 2016 010 258
- US-A1- 2016 315 556
- US-A1- 2018 191 273
- MORENO FRANK A ET AL: "A grid-tied power factor corrector microinverter without electrolytic capacitor by the control of voltage in a DC-link for a non-linear load", 2017 14TH INTERNATIONAL CONFERENCE ON ELECTRICAL ENGINEERING, COMPUTING SCIENCE AND AUTOMATIC CONTROL (CCE), IEEE, 20 October 2017 (2017-10-20), pages 1-6, XP033256429, DOI: 10.1109/ICEEE.2017.8108891 [retrieved on 2017-11-14]

## Description

### BACKGROUND OF THE INVENTION

### Field of the invention

The present disclosure relates to a photovoltaic module and, more particularly, to a photovoltaic module that can improve operation efficiency of an inverter.

### Related Art

A photovoltaic module means a state in which solar cells for solar photovoltaic power generation are connected in series or in parallel.

Meanwhile, a converter of a photovoltaic module performs maximum power point follow-up control. Meanwhile, various plans that can improve operation efficiency of an inverter in accordance with variations of input voltage that is input to the converter of a photovoltaic module are studied.

US 2018/191273 A1 relates to a three-level inverter switching method and in FIG. 2, an optional boost converter 210, an optional isolation transformer 220, an inverter 230, an output filter 240, an optional driver circuit 270, a driver circuit 260, an output sensor 250, a microcontroller 280, and a power supply 290 are disclosed. Referring to Figs. 3 and 7, Hysteresis current control pulse-width modulation (PWM) is illustrated.

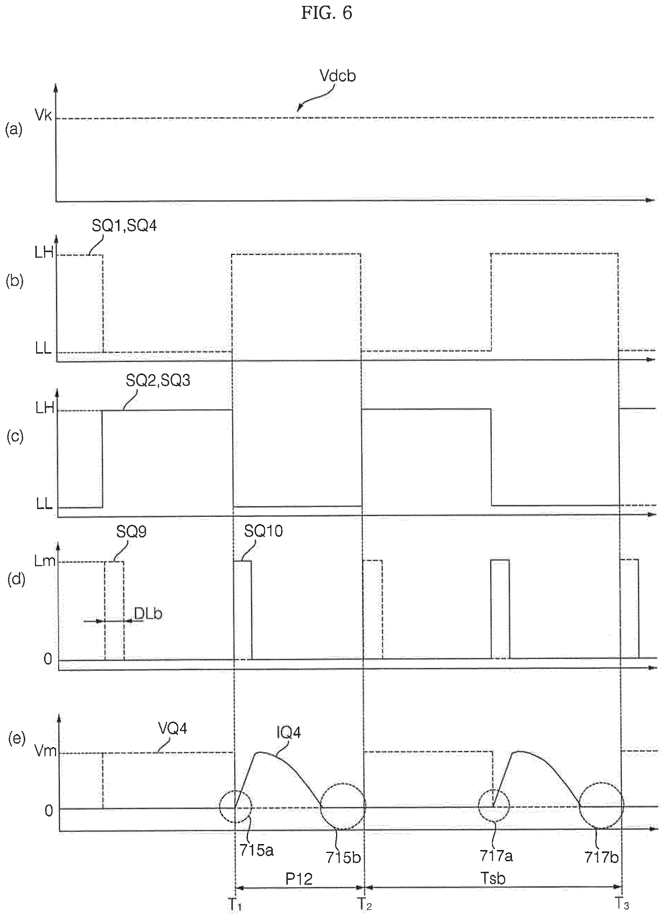

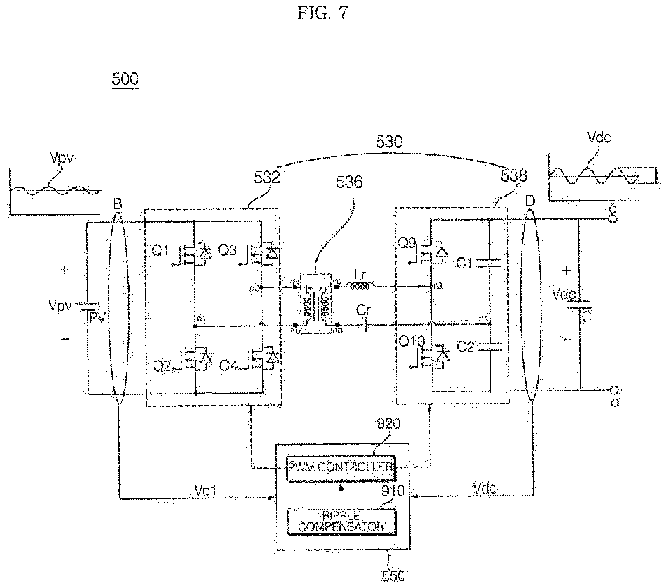

US 2016/315556 A1 relates to a method for acquiring values indicative of an ac current of an inverter and related circuit and inverter. In Figs. 6 and 7, a first predetermined switching period TSW1, and a second predetermined switching period TSW2 are disclosed.

JP 2016 010258 A relates to a power conversion device. The power conversion device 1 includes a power circuit 7 and a control device 8 and the power circuit 7 includes a DC filter circuit 11, an inverter circuit 12, a reactor circuit 13 and an AC filter circuit 14 in Fig. 7.

JP H06 245538 A relates to a direct current/alternate current power converter which prevents influence on output voltage by dead time.

JP 2011 109739 A relates to a power conversion apparatus and discloses a relationship between a carrier frequency determined by a first PWM pulse generator and a second PWM pulse generator.

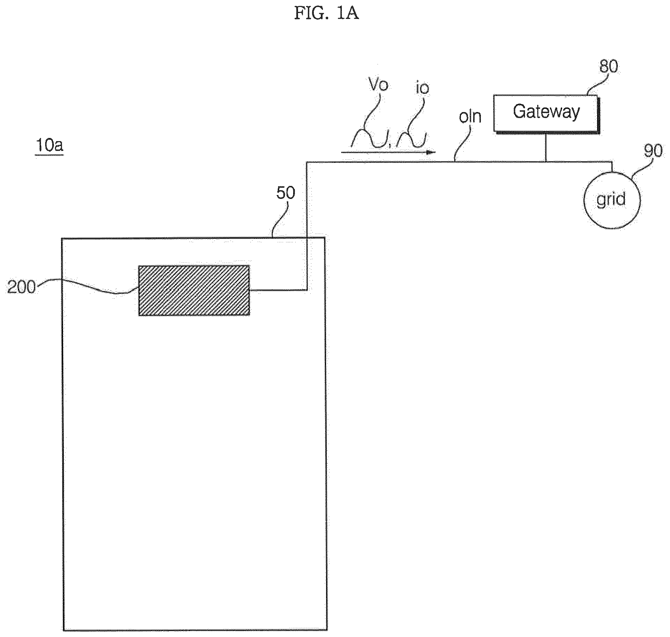

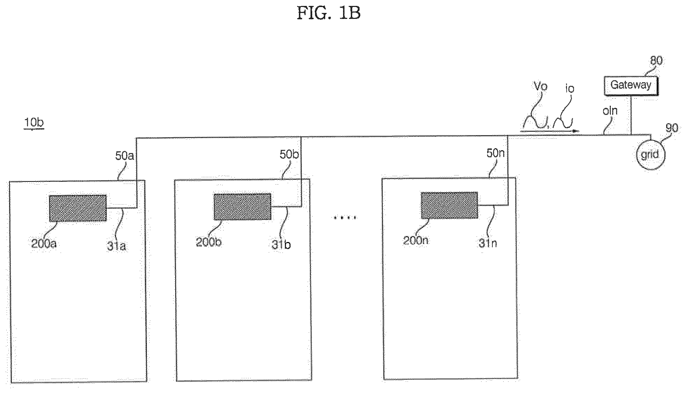

The document "A grid-tied power factor corrector microinverter without electrolytic capacitor by the control of voltage in a DC-link for a non-linear load" by Moreno Frank A et al., 2017 14th international conference on electrical engineering, computing science and automatic control, IEEE, 2017-10-20, pages 1-6, XP033256429 illustrates a DC/DC converter, a DC/AC converter and a TAB controller in Fig. 1.

### SUMMARY OF THE INVENTION

An object of the present disclosure is to provide a photovoltaic module according to independent claim 1, that can improve operation efficiency of an inverter.

Another object of the present disclosure is to provide a photovoltaic module that can reduce the size of a power conversion device.

In order to achieve the objects, a photovoltaic module according to the present disclosure includes: a solar cell module including a plurality of solar cells; a converter to convert a level of a DC power input from the solar cell module; an inverter to convert the DC power into an AC power; and a controller to control the inverter, in which the controller performs asynchronous pulse width modulation control for the inverter, and controls a switching frequency of at least some switching elements in the inverter to be changed for a period including a maximum point or a minimum point of the AC power output from the inverter.

The controller controls a switching frequency of at least some switching elements in the inverter to be lowest at the maximum point or the minimum point of the AC power output from the inverter.

The controller controls the switching frequency of at least some switching elements in the inverter in the second period to be lower than that of the first period among the first period including a zero-crossing point of the AC power output from the inverter and the second period including a maximum point or a minimum point of the AC power output from the inverter.

The inverter includes: first and second switching elements connected to each other in series; and third and fourth switching elements connected to the first and second switching elements in parallel and connected to each other in series.
The controller may control the first and second switching elements to perform second speed switching more than the third and fourth switching elements, and may control a switching frequency of the first and second switching elements of the inverter to be changed for a period including a maximum point or a minimum point of the AC power output from the inverter.

The controller may control a switching frequency of the third and fourth switching elements to be the same as a grid frequency.

The controller may control a switching frequency of the third and fourth switching elements to be same.

The first switching element to the fourth switching element may include a gallium nitride (GaN) transistor.

### BRIEF DESCRIPTION OF THE DRAWINGS

FIG. 1A is a diagram showing an example of a photovoltaic system including a photovoltaic module according to an embodiment of the present disclosure;
FIG. 1B is a diagram showing another example of a photovoltaic system including a photovoltaic module according to an embodiment of the present disclosure;

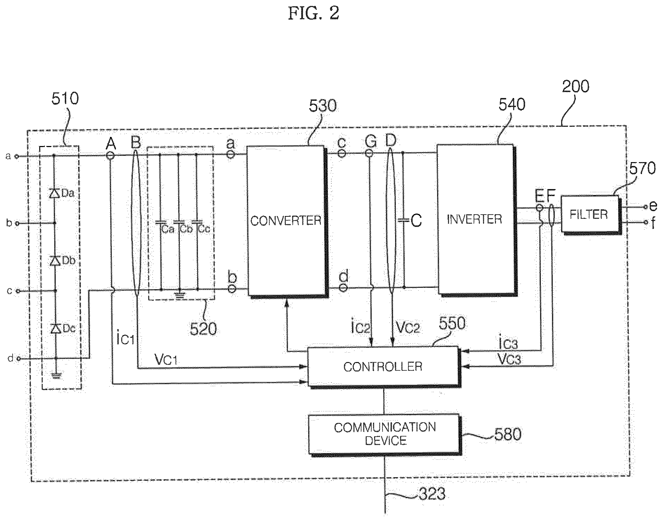

FIG. 2 is a diagram showing an internal circuit of the junction box in the photovoltaic module of FIG. 1A or FIG. 1B;

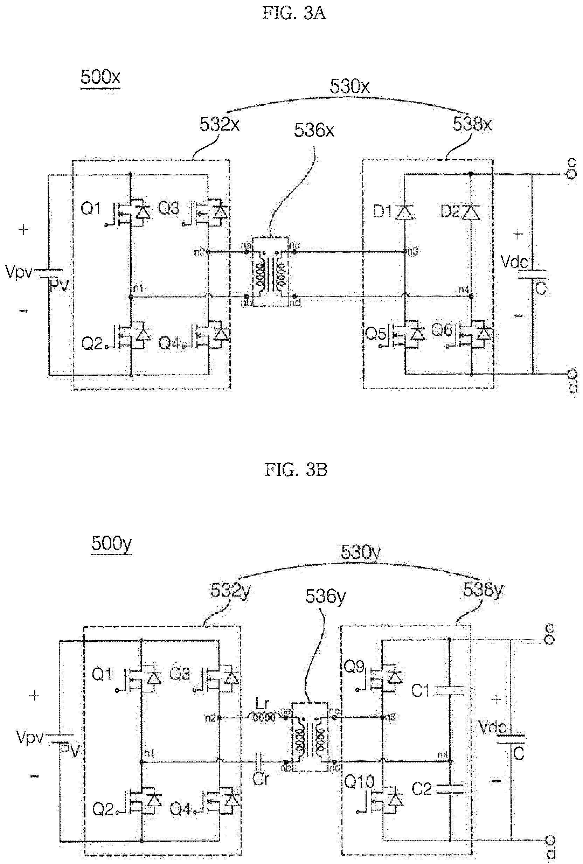

FIGS. 3A to 3B are a circuit diagram of a power conversion device included in a photovoltaic module related to the present disclosure;

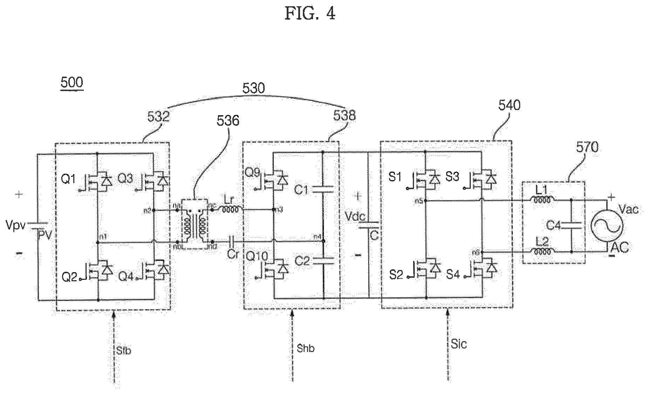

FIG. 4 is a circuit diagram of a power conversion device in the photovoltaic module according to an embodiment of the present disclosure;

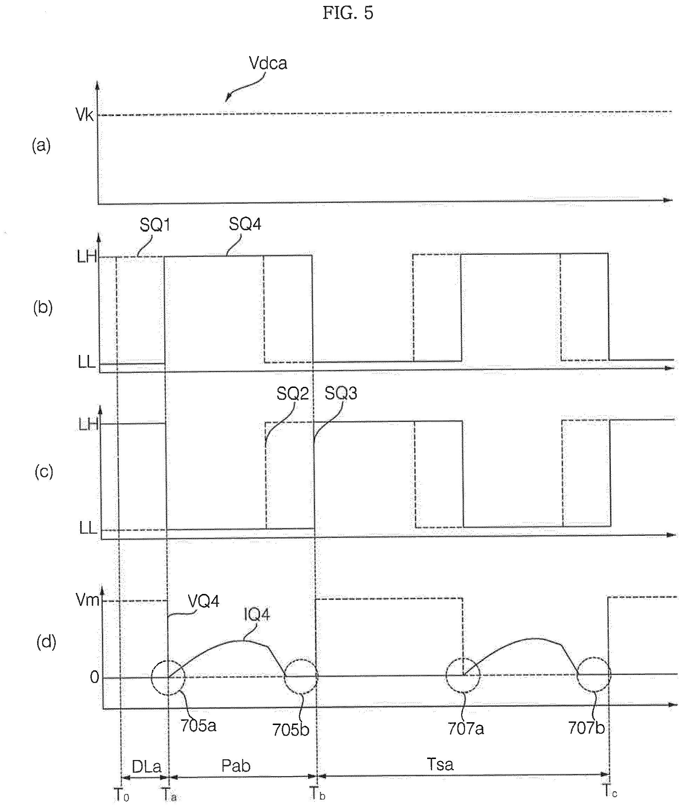

FIGS. 5 to 7 are diagrams referred to for describing the power conversion device of FIG. 4;

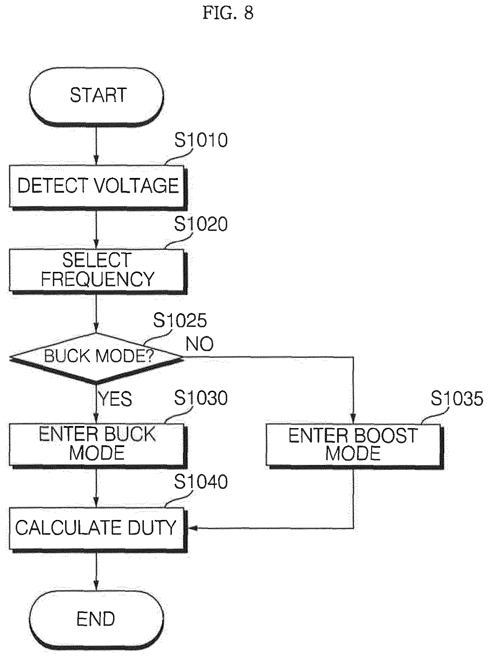

FIG. 8 is a flowchart illustrating a method of operating the photovoltaic module according to an embodiment of the present disclosure;

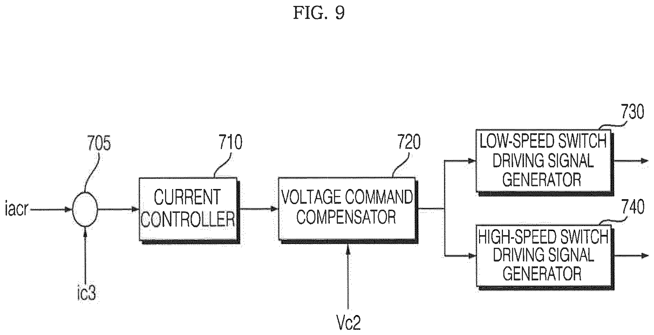

FIGS. 9 to 14B are diagrams referred to for describing the power conversion device of FIG. 4;

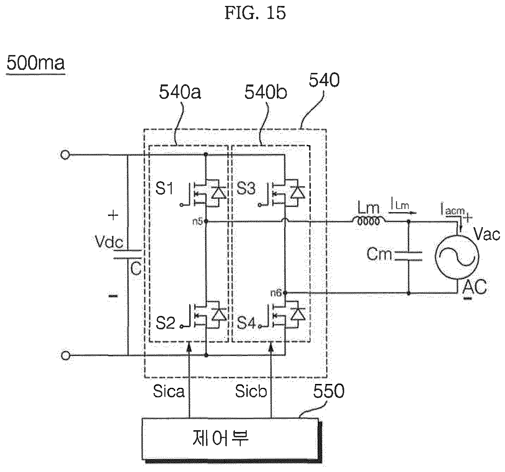

FIG. 15 is a diagram showing a power conversion device according to an embodiment of the present disclosure;

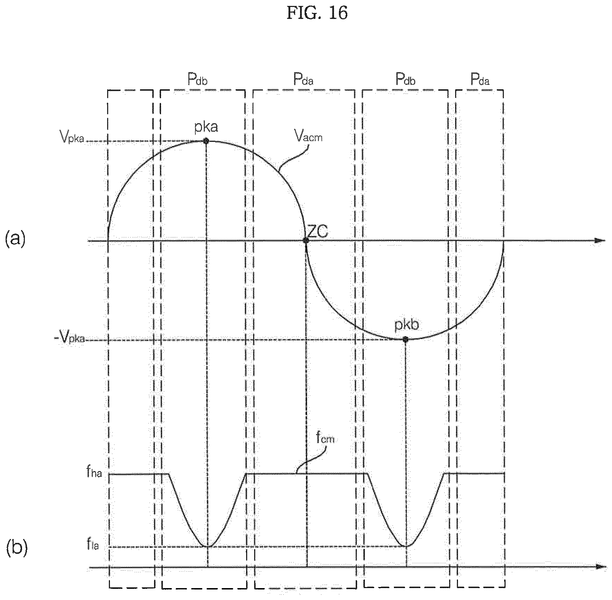

FIGS. 16 to 18B are diagrams referred to for describing the operation of FIG. 15; and

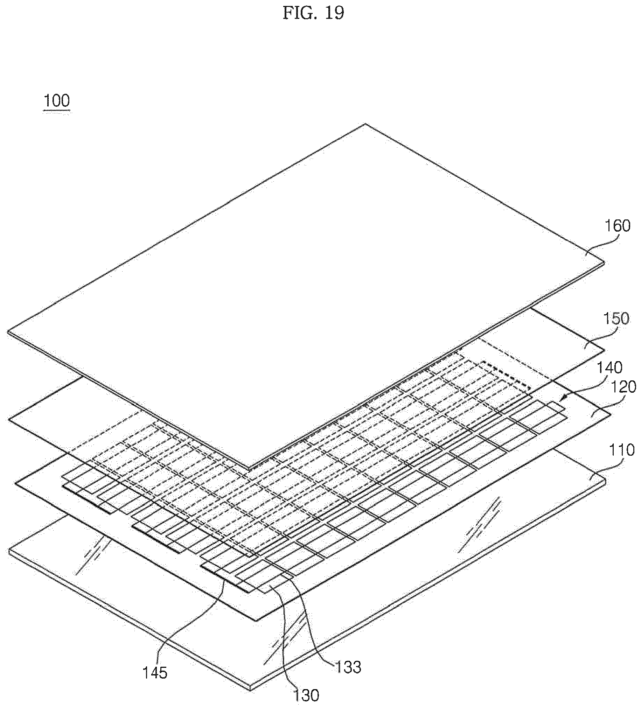

FIG. 19 is an exploded perspective view of the solar cell module of FIG. 1A or FIG. 1B.

### DESCRIPTION OF EXEMPLARY EMBODIMENTS

In this embodiment, a plan that can reduce a ripple of an input current that is input to a converter in a photovoltaic module.

The present disclosure proposes a method for reducing ripples in current input to a converter in a photovoltaic module.

The present disclosure will be described in more detail with reference to the drawings.

The suffixes "module" and "unit" of elements herein are used for convenience of description and do not have any distinguishable meanings or functions. Accordingly, the suffixes "module" and "unit" can be used interchangeably.

FIG. 1A is a diagram showing an example of a photovoltaic system including a photovoltaic module according to an embodiment of the present disclosure.

Referring to FIG. 1A, a photovoltaic system 10a according to an embodiment of the present disclosure may include a photovoltaic module 50 and a gateway 80.

The photovoltaic module 50 may integrally include a solar cell module 100 and a junction box 200 including a power conversion device (500 in FIG. 4) which converts DC power in the solar cell module and outputs the converted power.

Although the junction box 200 is attached to the rear side of the solar cell module 100 in the figure, the present disclosure is not limited thereto. The junction box 200 may be separate from the solar cell module 100.

A cable oln for supplying AC power output from the junction box 200 to a grid 90 may be electrically connected to an output terminal of the junction box 200.

The gateway 80 may be positioned between one or more power conversion device and the grid 90. The gateway 80 may detect an alternating current (AC) io and an AC voltage vo output from the photovoltaic module 50 through the cable oln. The gateway 80 may output a power factor adjustment signal for power factor adjustment based on a phase difference between the AC io and the AC voltage vo output from the photovoltaic module 50. To this end, the gateway 80 and the photovoltaic module 50 may perform power line communication (PLC) using a cable 323.

The power conversion device (500 in FIG. 4) included in the photovoltaic module 50 may convert DC power output from the solar cell module 100 into AC power and output the AC power. To this end, the power conversion device (500 in FIG. 4) in the photovoltaic module 50 may include a converter (530 in FIG. 6) and an inverter (540 in FIG. 4).

The power converter (500 in FIG. 4) may be called a micro-inverter. Accordingly, the micro-inverter may include a converter (530 in Fig. 4) and an inverter (540 in Fig. 4).

In the present disclosure, a 2-stage power conversion device which converts the level of DC power output from the solar cell module 100 through the converter 530 included in the power conversion device (500 in FIG. 4) or the micro-inverter, and then performs AC power conversion through the inverter 540 is described.

The present invention proposes a method for performing power conversion with high voltage boost and high efficiency through the converter 530 in the 2-stage power conversion device.

To this end, the photovoltaic module 50 according to an embodiment of the present disclosure may include the solar cell module 100, the converter 530, and a controller 550. The photovoltaic module 50 according to an embodiment of the present disclosure may further include the inverter 540.

The converter 530 in the power conversion device 500 according to an embodiment of the present disclosure may include a full-bridge switching unit 532 which switches DC power, a transformer 536 having an input side connected to an output terminal of the full-bridge switching unit 532, a synchronous rectifier 538 connected to an output side of the transformer 536, and a resonant capacitor Cr and a resonant inductor Lr which are connected between the transformer 536 and the synchronous rectifier 538. The controller 550 may perform power conversion with high voltage boost and high efficiency by changing a switching frequency of the full-bridge switching unit 532 and the synchronous rectifier 538 which is a half-bridge switching unit based on the input voltage of the converter 530 or the voltage of a DC-terminal capacitor C.

Particularly, the controller 550 may control phase shift of the full-bridge switching unit 532 such that the full-bridge switching unit 532 operates in a buck mode and control the full-bridge switching unit 532 and the synchronous rectifier 538 to operate at a first switching frequency when the voltage of the DC-terminal capacitor C is equal to or higher than a target voltage, and may control duty of the synchronous rectifier 538 which is a half-bridge switching unit such that the synchronous rectifier 538 operates in a boost mode and the full-bridge switching unit 532 and the synchronous rectifier 538 operate at a second switching frequency lower than the first switching frequency when the voltage of the DC-terminal capacitor C is lower than the target voltage, thereby performing power conversion with high voltage boost and high efficiency.

Here, the first and second switching frequencies may be much higher than a grid frequency, and thus the sizes of circuit elements in the converter 530 can be reduced.

Particularly, the turn ratio of the transformer 536 can be reduced and thus the size of the transformer 536 can be decreased. Consequently, the size of the converter 530 used in the photovoltaic module 50 can be reduced.

Control is performed such that ripples in the voltage of the DC-terminal capacitor C are reduced, and thus a film capacitor instead of an electrolytic capacitor can be used as the DC-terminal capacitor C. Accordingly, the size of the DC-terminal capacitor C can be reduced.

When the voltage of the DC-terminal capacitor is equal to or higher than the target voltage, the full-bridge switching unit 532 may be controlled to enter the buck mode in which a phase difference between switching elements in the full-bridge switching unit 532 increases as the difference between the voltage of the DC-terminal capacitor and the target voltage increases such that the voltage of the DC-terminal capacitor follows the target voltage.

When the voltage of the DC-terminal capacitor is lower than the target voltage, the synchronous rectifier 538 is controlled to enter the boost mode in which turn-on duty of switching elements in the synchronous rectifier 538 increases as the difference between the voltage of the DC-terminal capacitor and the target voltage increases such that the voltage of the DC-terminal capacitor follows the target voltage.

Meanwhile, the converter 530 in the power conversion device 500 according to another embodiment of the present disclosure may include the full-bridge switching unit 532 which switches DC power, the transformer 536 having an input side connected to the output terminal of the full-bridge switching unit 532, the synchronous rectifier 538 connected to the output side of the transformer 536, and the resonant capacitor Cr and the resonant inductor Lr connected between the transformer 536 and the synchronous rectifier 538. The controller 550 may control the full-bridge switching unit 532 to operate in the buck mode or boost mode depending on the voltage level of the DC-terminal capacitor C, thereby performing power conversion with high voltage boost and high efficiency.

The inverter 540 in the power conversion device 500 according to an embodiment of the present disclosure includes a plurality of switching elements S1 to S4 and converts DC power from a DC-terminal capacitor C into AC power. Some of the plurality of switching elements S1 to S4 may perform switching at a third switching frequency and other switching elements may perform switching at a forth switching frequency.

That is, the controller 550 may control some of the switching elements S1 to S4 to perform switching at the thied switching frequency and control other switching elements to perform switching at the forth switching frequency.

Here, the third switching frequency may correspond to a grid frequency and the forth switching frequency may be higher than the grid frequency.

Accordingly, second speed switching is performed with respect to some switching elements in the inverter 540 and thus not only the size of the inverter 540 but also the sizes of other circuit elements in the power conversion device can be reduced according to a high switching frequency.

The other switching elements among the switching elements S1 to S4 may include GaN transistors or SiC transistors and thus reverse recovery loss during second speed switching can be reduced.

Further, a filter 570 provided at output terminals of the inverter 540 includes an inductor connected to one of the output terminals of the inductor 540 and a capacitor connected between the inductor and the other output terminal of the inverter 540. Accordingly, a common mode voltage at the output terminals of the inverter 540 can be reduced. Furthermore, a harmonic component THD of output current can be reduced.

The controller 550 may perform power conversion with high voltage boost and high efficiency by changing a switching frequency of a full-bridge switching unit 532 based on the input voltage of the converter 530 or the voltage of the DC-terminal capacitor C.

Particularly, the controller 550 may control the full-bridge switching unit 532 to enter a buck mode and operate at a first switching frequency when the voltage of the DC-terminal capacitor C is equal to or higher than a target voltage and control the full-bridge switching unit 532 to enter a boost mode and operate at a second switching frequency lower than the first switching frequency when the voltage of the DC-terminal capacitor C is lower than the target voltage, thereby performing power conversion with high voltage boost and high efficiency.

Here, the third and fourth switching frequencies may be much higher than the grid frequency. Accordingly, the sizes of circuit elements in the converter 530 can be reduced.

Particularly, the turn ratio of a transformer 536 can be reduced, and thus the size of the transformer 536 can be decreased. Consequently, the size of the converter 530 used in the photovoltaic module 50 can be reduced.

Control is performed such that ripples in the voltage of the DC-terminal capacitor C are reduced, and thus a film capacitor instead of an electrolytic capacitor can be used as the DC-terminal capacitor C. Accordingly, the size of the DC-terminal capacitor C can be reduced.

When the voltage of the DC-terminal capacitor is equal to or higher than the target voltage, the full-bridge switching unit 532 may be controlled to enter the buck mode in which a phase difference between switching elements in the full-bridge switching unit 532 increases as the difference between the voltage of the DC-terminal capacitor and the target voltage increases such that the voltage of the DC-terminal capacitor follows the target voltage.

When the voltage of the DC-terminal capacitor is lower than the target voltage, a synchronous rectifier 538 may be controlled to enter the boost mode in which turn-on duty of switching elements in the synchronous rectifier 538 increases as the difference between the voltage of the DC-terminal capacitor and the target voltage increases such that the voltage of the DC-terminal capacitor follows the target voltage.

Meanwhile, the converter 540 in the power conversion device 500 according to another embodiment of the present disclosure is driven according to asynchronous PWM. Accordingly, the sizes of circuit elements in the power conversion device can be reduced.

FIG. 1B is a diagram showing another example of a photovoltaic system including a photovoltaic module according to an embodiment of the present disclosure.

Referring to FIG. 1B, a photovoltaic system 10b according to an embodiment of the present disclosure may include a plurality of photovoltaic modules 50a, 50b, ..., 50n and the gateway 80.

The photovoltaic system 10b of FIG. 1B differs from the photovoltaic system 10a of FIG. 1A in that the photovoltaic modules 50a, 50b, ..., 50n are connected in parallel.

The photovoltaic modules 50a, 50b, ..., 50n may respectively include solar cell modules 100a, 100b, ..., 100n and junction boxes 200a, 200b, ..., 200n including circuit elements for converting DC power in the solar cell modules and outputting the converted power.

Although the junction boxes 200a, 200b, ..., 200n are respectively attached to the rear sides of the solar cell modules 100a, 100b, ..., 100n in the figure, the present disclosure is not limited thereto. The junction boxes 200a, 200b, ..., 200n may be separate from the solar cell modules 100a, 100b, ..., 100n.

Further, cables 31a, 31b, ..., oln for supplying AC power output from the junction boxes 200a, 200b, ..., 200n to the grid 90 may be electrically connected to output terminals of the junction boxes 200a, 200b, ..., 200n, respectively.

As described above with reference to FIG. 1A, the converter 530 in the power conversion device 500 included in each of the photovoltaic modules 50a, 50b, ... 50n may include a full-bridge switching unit 532 which switches DC power, a transformer 536 having an input side connected to an output terminal of the full-bridge switching unit 532, a synchronous rectifier 538 connected to an output side of the transformer 536, and a resonant capacitor Cr and a resonant inductor Lr which are connected between the transformer 536 and the synchronous rectifier 538. The controller 550 may perform power conversion with high voltage boost and high efficiency by changing a switching frequency of the full-bridge switching unit 532 and the synchronous rectifier 538 which is a half-bridge switching unit based on the input voltage of the converter 530 or the voltage of a DC-terminal capacitor C.

In the inverter 540 included in the power conversion device 500 included in each of the photovoltaic modules 50a, 50b, ... 50n shown in FIG. 1B, some of the switching elements S1 to S4 may perform switching at the third switching frequency and other switching elements may perform switching at the forth frequency higher than the third switching frequency, as described above with referent to FIG. 1A. Accordingly, the size of the power conversion device can be reduced.

Particularly, since switching is performed at the third switching frequency corresponding to the grid frequency and the forth switching frequency higher than the third switching frequency, second speed switching effect is obtained and thus not only the size of the inverter 540 but also the sizes of circuit elements in the power conversion device including the inverter 540 can be reduced.

FIG. 2 is a diagram showing an internal circuit of the junction box in the photovoltaic module of FIG. 1A or FIG. 1B.

Referring to the figure, the junction box 200 may convert DC power from the solar cell module 100 and output the converted power.

Particularly, the junction box 200 according to the present disclosure may include the power conversion device (500 in FIG. 4) for outputting AC power.

To this end, the junction box 200 may include the converter 530, the inverter 540 and the controller 550 for controlling the same.

In addition, the junction box 200 may further include a bypass diode unit 510 for bypass, a capacitor unit 520 for storing DC power, and a filter 570 for filtering output AC power.

The junction box 200 may further include a communication device 580 for communication with the external gateway 80.

In addition, the junction box 200 may further include an input current detector A, an input voltage detector B, a converter output current detector C, a converter output voltage detector D, an inverter output current detector E and an inverter output voltage detector F.

The controller 550 may control the converter 530, the inverter 540 and the communication device 580.

The bypass diode unit 510 may include the bypass diodes Dc, Db and Da arranged between the first to fourth conductive lines (not shown) of the solar cell module 100. Here, the number of bypass diodes is one or more, preferably, less than the number of conductive lines by one.

The bypass diodes Dc, Db and Da receive photovoltaic DC power from the solar cell module 100, particularly, from the first to fourth conductive lines (not shown) in the solar cell module 100. When a reverse voltage is generated in DC power from at least one of the first to fourth conductive lines (not shown), the bypass diodes Dc, Db and Da may bypass the DC power.

DC power which has passed through the bypass diode unit 510 may be input to the capacitor unit 520.

The capacitor unit 520 may store the DC power input through the solar cell module 100 and the bypass diode unit 510.

Although the figure shows that the capacitor unit 520 includes a plurality of capacitors Ca, Cb and Cc connected in parallel, a plurality of capacitors may be connected in series and parallel or connected in series to a ground terminal. Alternatively, the capacitor unit 520 may include only one capacitor.

The converter 530 may convert the level of an input voltage from the solar cell module 100, which has passed through the bypass diode unit 510 and the capacitor unit 520.

Particularly, the converter 530 may perform power conversion using DC power stored in the capacitor unit 520.

The converter 530 according to an embodiment of the present disclosure will be described in more detail with reference to FIG. 4.

Switching elements in the converter 530 may be turned on/off based on a converter switching control signal from the controller 550. Accordingly, level-converted DC power can be output.

The inverter 540 may convert the DC power converted by the converter 530 into AC power.

The figure shows a full-bridge inverter. That is, upper arm switching elements S1 and S3 connected in series and lower arm switching elements S2 and S4 connected in series are paired, and the two pairs of upper and lower arm switching elements S1, S2, S3 and S4 are connected in parallel. A diode may be connected in anti-parallel with each switching element S1 to S4.

The switching elements S1 to S4 in the inverter 540 may be turned on/off based on an inverter switching control signal from the controller 550. Accordingly, AC power having a predetermined frequency can be output. Desirably, AC power having the same frequency (about 60 Hz or 50 Hz) as the AC frequency of the grid is output.

The capacitor C may be disposed between the converter 530 and the inverter 540.

The capacitor C may store the DC power having the level converted by the converter 530. Both terminals of the capacitor C may be called DC terminals and thus the capacitor C may be called a DC-terminal capacitor.

The input current detector A may detect input current ic1 supplied from the solar cell module 100 to the capacitor unit 520.

The input voltage detector B may detect an input voltage Vc1 supplied from the solar cell module 100 to the capacitor unit 520. Here, the input voltage Vc1 may be the same as the voltage stored in the capacitor unit 520.

The detected input current ic1 and input voltage vc1 may be input to the controller 550.

The converter output current detector C detects output current ic2 from the converter 530, that is, DC-terminal current, and the converter output voltage detector D detects an output voltage vc2 from the converter 530, that is, a DC-terminal voltage. The detected output current ic2 and output voltage vc2 may be input to the controller 550.

The inverter output current detector E detects current ic3 output from the inverter 540 and the inverter output voltage detector F detects a voltage vc3 output from the inverter 540. The detected current ic3 and voltage vc3 are input to the controller 550.

The controller 550 may output control signals for controlling the switching elements of the converter 530. Particularly, the controller 550 may output a turn-on timing signal of the switching elements included in the converter 530 based on at least one of the detected input current ic1, input voltage vc1, output current ic2, output voltage vc2, output current ic3 and output voltage vc3.

Further, the controller 550 may output inverter control signals for controlling the switching elements S1 to S4 of the inverter 540. Particularly, the controller 550 may output a turn-on timing signal of the switching elements S1 to S4 of the inverter 540 based on at least one of the detected input current ic1, input voltage vc1, output current ic2, output voltage vc2, output current ic3 or output voltage vc3.

Further, the controller 550 may calculate a maximum power point with respect to the solar cell module 100 and control the converter 530 to output DC power corresponding to maximum power according thereto.

The communication device 580 may perform communication with the gateway 80.

For example, the communication device 580 may exchange data with the gateway 80 through power line communication.

The communication device 580 may transmit current information, voltage information and power information of the photovoltaic module 50 to the gateway 80.

The filter 570 may be disposed at the output terminals of the inverter 540.

In addition, the filter 570 may include a plurality of passive elements and adjust a phase difference between an AC io and an AC voltage vo output from the inverter 540 based on at least some of the plurality of passive elements.

FIGS. 3A and 3B are circuit diagrams of power conversion devices included in a photovoltaic module related to the present disclosure.

A power conversion device 500x included in the photovoltaic module shown in FIG. 3A includes a full-bridge switching unit 532x, a transformer 536x and a synchronous rectifier 538x.

In the synchronous rectifier 538x included in the power conversion device 500x of the photovoltaic module, a diode D1 and a switching element Q5 are connected in series, a diode D2 and a switching element Q6 are connected in series, and the two pairs of the diodes and switching elements are connected in parallel.

According to the power conversion device 500x included in the photovoltaic module of FIG. 3A, the turn ratio of the transformer 536x needs to be considerably high, approximately 1:12, when high voltage boost is required according to variation in an input voltage Vpv. That is, the transformer 536x having a high turn ratio needs to be used. Furthermore, an additional leakage inductor is required. Accordingly, the size of the transformer 536x increases, thus increasing the volume of the power conversion device 500x.

A power conversion device 500y in the photovoltaic module shown in FIG. 3B includes a full-bridge switching unit 532y, a transformer 536y, a synchronous rectifier 538y, a resonant capacitor Cr and a resonant inductor Lr between the full-bridge switching unit 532y and the transformer 536y.

According to the power conversion device 500y included in the photovoltaic module of FIG. 3B, the transformer 536y needs to have a high turn ratio although the resonant capacitor Cr and the resonant inductor Lr are provided at the primary side of the transformer 536y. Accordingly, the size of the transformer 536y increases, thus increasing the volume of the power conversion device 500y.

The present disclosure proposes a method for reducing the size of the transformer while performing power conversion with high voltage boost and high efficiency. Particularly, the present disclosure proposes a method for reducing the sizes of circuit elements in the converter by increasing a switching frequency of the full-bridge switching unit 532 and the synchronous rectifier 538 which is a half-bridge switching unit. This will be described with reference to FIG. 4 and the following figures.

FIG. 4 is a circuit diagram of the power conversion device in the photovoltaic module according to an embodiment of the present disclosure and FIGS. 5 to 7 are diagrams referred to for describing the power conversion device of FIG. 4.

Referring to the figures, the power conversion device 500 in the photovoltaic module 100 according to an embodiment of the present disclosure may include the bypass diode unit 510, the capacitor unit 520, the controller 550, the communication device 580, the input current detector A, the input voltage detector B, the converter output current detector C, the converter output voltage detector D, the inverter output current detector E and the inverter output voltage detector F, which are shown in FIG. 4, in addition to the converter 530 and the inverter 540.

Meanwhile, to reduce electromagnetic noise, the filter 570 for filtering AC power output from the inverter 540 may be provided at the output terminals of the inverter 540.

The filter 570 may include first and second inductor L1 and L2 connected to both output terminals of the inverter 530, respectively, and a capacitor C4 connected between the first inductor L1 and the second inductor L2.

Accordingly, the filter 570 is realized in an asymmetrical form in consideration of the inverter 540 operating according to asynchronous PWM control, and thus a common mode voltage at the output terminals of the inverter 540 can be reduced and a harmonic component THD of output current can be reduced.

The following description focuses on the converter 530 shown in FIG. 4.

The power conversion device 500 in the photovoltaic module 50 according to an embodiment of the present disclosure may include the converter 530 which converts the level of DC power input from the solar cell module 100, and the DC-terminal capacitor C which stores DC power output from the converter 530.

The power conversion device 500 in the photovoltaic module 100 according to an embodiment of the present disclosure may further include the inverter 570 which converts the DC power from the DC-terminal capacitor C into AC power.

The converter 530 according to an embodiment of the present disclosure may include the full-bridge switching unit 532 which switches DC power, the transformer 536 having the input side connected to the output terminal of the full-bridge switching unit 532, the synchronous rectifier 538 connected to the output side of the transformer 536, the resonant capacitor Cr and the resonant inductor Lr which are connected between the transformer 536 and the synchronous rectifier 538.

Particularly, ripples in input current can be reduced according to resonance of the resonant capacitor Cr, the resonant inductor Lr and the transformer 536.

Switching elements Q1 to Q4 in the full-bridge switching unit 532 can perform zero-voltage switching ZVS and zero-current switching ZCS according to the resonant capacitor Cr and the resonant inductor Lr.

As shown, the full-bridge switching unit 532 may include the first and second switching elements Q1 and Q2 connected in series, and the third and fourth switching elements Q3 and Q4 respectively connected in parallel with the first and second switching elements Q1 and Q2.

In addition, the input terminals na and nb of the transformer 536 may be connected between a first node n1 between the first and second switching elements Q1 and Q2 and a second node n2 between the third and fourth switching elements Q3 and Q4.

The inverter 540 may include fifth and sixth switching elements S1 and S2 connected in series, and seventh and eighth switching elements S3 and S4 connected in series.

AC power can be output through a fifth node n5 between the fifth and sixth switching elements S1 and S2 and a sixth node n6 between seventh and eighth switching elements S3 and S4.

As shown, the synchronous rectifier 538 may include ninth and tenth switching elements Q9 and Q10 connected in series, and first and second capacitors C1 and C2 connected in series.

Here, the ninth and tenth switching elements Q9 and Q10 may be connected in parallel with the first and second capacitors C1 and C2.

The output side of the transformer 536 may be connected between a third node n3 between the ninth and tenth switching elements Q9 and Q10 and a fourth node n4 between the first and second capacitors C1 and C2.

Meanwhile, the synchronous rectifier 538 is configured in a half bridge form and thus may be called a half-bridge switching unit.

The synchronous rectifier 538 amplifies an input voltage twice and outputs the amplified voltage and thus may be called a voltage doubler.

The controller 550 may control the converter 530 and the inverter 540 together.

. Particularly, the controller 550 may output a control signal Sfb to the full-bridge switching unit 532 included in the converter 530 for maximum power point tracking control.

The controller 550 may output a control signal Shb to the synchronous rectifier 538 in order to control the same.

Further, the controller 550 may output a control signal Sic to the inverter 540 in order to control the same.

The controller 550 may change the switching frequency of the full-bridge switching unit 532 based on the input voltage of the converter 530 or the voltage of the DC-terminal capacitor C.

Specifically, the controller 550 may control the full-bridge switching unit 532 to operate in the buck mode or boost mode depending on the voltage level of the DC-terminal capacitor C.

The controller 550 may control the full-bridge switching unit 532 to operate in the buck mode when the voltage of the DC-terminal capacitor C is equal to or higher than a target voltage and control the synchronous rectifier 538 of half-bridge switching unit to operate in the boost mode when the voltage of the DC-terminal capacitor C is lower than the target voltage.

The controller 550 may control the full-bridge switching unit 532 to enter the buck mode and operate at a first switching frequency (1/Tsa = Fsa in FIG. 5) when the voltage of the DC-terminal capacitor C is equal to or higher than the target voltage, and may control the synchronous rectifier 538 of half-bridge switching unit to operate in the boost mode, and may control the full-bridge switching unit 532 and the synchronous rectifier 538 to operate at a second switching frequency (1/Tsb = Fsb in FIG. 6) lower than the first switching frequency (1/Tsa = Fsa in FIG. 5) when the voltage of the DC-terminal capacitor C is lower than the target voltage.

It is desirable that the switching frequency of the full-bridge switching unit 532 be higher than a grid frequency.

For example, the first switching frequency may be 135 kHz and the second switching frequency may be 90 kHz. Accordingly, second speed switching is performed and thus the sizes of the circuit elements in the converters 530 can be reduced. Particularly, the size of the transformer 536 can be reduced.

The controller 550 can control ripples in the voltage of the DC-terminal capacitor C to decrease through the buck mode or boost mode.

Further, the controller 550 may control some of the switching elements S1 to S4 in the inverter 540 to perform switching at the third switching frequency and control other switching elements to perform switching at the forth switching frequency higher than the third switching frequency.

That is, the controller 550 may perform asynchronous PWM control for the inverter 540.

Here, the third switching frequency corresponds to the grid frequency and the forth switching frequency is higher than the third switching frequency, and thus the inverter 540 can perform second speed switching. Accordingly, the sizes of circuit elements in the power conversion device can be reduced, thus decreasing the size of the power conversion device.

The controller 550 may control the fifth and sixth switching elements S1 and S2 to operate at the forth switching frequency and control the seventh and eighth switching elements S3 and S4 to operate at the third switching frequency.

Further, the controller 550 may control the fifth and sixth switching elements S1 and S2 to perform switching according to PWM control while the seventh switching element S3 is turned on and control the sixth and fifth switching elements S2 and S1 to perform switching according to PWM control while the eighth switching element S4 is turned on.

Meanwhile, it is desirable that some S3 and S4 of the switching elements S1 to S4 included in the inverter 540 and others S1 and S2 of the switching elements S1 to S4 be switching elements of different types.

The switching elements S1 and S2 among the switching elements S1 to S4 in the inverter 540, for example, switching elements performing second speed switching, may include GaN transistors or SiC transistors. Accordingly, reverse recovery loss during second speed switching can be reduced.

The switching elements S3 and S4 among the switching elements S1 to S4 in the inverter 540, for example, switching elements performing first speed switching, may include metal-oxide-semiconductor field-effect-transistors (MOSFETs).

FIG. 5 is a diagram referred to for describing a case in which the full bridge switching unit 532 operates in the buck mode.

FIG. 5(a) shows a waveform Vdca of the DC-terminal voltage which is the voltage of the DC-terminal capacitor C.

FIG. 5(b) shows switching control signals SQ1 and SQ4 applied to the gates of the first switching element Q1 and the fourth switching element Q4.

FIG. 5(c) shows switching control signals SQ2 and SQ3 applied to the gates of the second switching element Q2 and the third switching element Q3.

FIG. 5(d) shows a voltage waveform VQ4 and a current waveform IQ4 applied to the fourth switching element Q4.

In the buck mode, the first and fourth switching elements Q1 and Q4 are not alternately turned on and the second and third switching elements Q2 and Q3 are not alternately turned on in the full-bridge switching unit 532 and turn-on periods thereof may partially overlap according to phase shift as shown.

That is, a phase difference between the first switching element Q1 and the fourth switching element Q4 is not fixed to 180 degrees and phases or turn-on timing may be varied according to phase shift.

The figure shows that the phase difference between the first switching element Q1 and the fourth element Q4 is DLa.

The controller 550 may control the full-bridge switching unit 532 to operate at a maximum switching frequency and change the phase difference DLa between switching elements in the full-bridge switching unit 532 in the buck mode.

When the voltage of the DC-terminal capacitor C is equal to or higher than a target voltage, the controller 550 may control the phase difference DLa between switching elements in the full-bridge switching unit 532 to increase as the difference between the voltage of the DC-terminal capacitor C and the target voltage increases.

Particularly, the controller 550 may control the phase difference DLa between the first switching element Q1 and the fourth switching element Q4 to increase as the difference between the voltage of the DC-terminal capacitor C and the target voltage increases.

The controller 550 may control turn-on timing of the fourth and third switching elements Q4 and Q3 in the full-bridge switching unit 532 to be delayed from turn-on timing of the first and second switching elements Q1 and Q2 in the buck mode. Accordingly, the DC-terminal voltage Vda can be varied.

For example, when the first and fourth switching elements Q1 and Q4 are turned on, current flows and thus the resonant capacitor Cr and the resonant inductor Lr resonate.

Thereafter, when the fourth switching element A4 is turned off and the third switching element Q3 is turned on, the current flowing through the transformer 536 decreases to the ground GND or zero, the converter 530 operates in a discontinue mode (DCM) and a secondary switch may perform zero-current switching (ZCS).

The switching elements Q9 and Q10 in the synchronous rectifier 538 may be switched in synchronization with the first and second switching elements Q1 and Q2 in the full-bridge switching unit 532.

The controller 550 may control turn-on timing delay to increase as the difference between the voltage of the DC-terminal capacitor C and the target voltage increases when the voltage of the DC-terminal capacitor C is equal to or higher than the target voltage.

Accordingly, the difference between the voltage of the DC-terminal capacitor C and the target voltage can be reduced, and thus the DC-terminal voltage waveform Vdca having little ripples, as shown in FIG. 5(a), can be output.

At time Ta and time Tb, zero-voltage turn-on switching 705a and 705b and zero-voltage turn-off switching 705a and 705b of the switching elements in the full-bridge switching unit 532 are performed. Accordingly, power conversion with high voltage boost and high efficiency can be performed.

FIG. 6 is a diagram referred to for describing a case in which the full-bridge switching unit 532 and the synchronous rectifier 538 operates in the boost mode.

FIG. 6(a) shows a waveform Vdcb of the DC-terminal voltage which is the voltage of the DC-terminal capacitor C.

FIG. 6(b) shows the switching control signals SQ1 and SQ4 applied to the gates of the first switching element Q1 and the fourth switching element Q4.

FIG. 6(c) shows the switching control signals SQ2 and SQ3 applied to the gates of the second switching element Q2 and the third switching element Q3.

FIG. 6(d) shows switching control signals SQ9 and SQ10 applied to the gates of the ninth switching element Q9 and the tenth switching element Q10 in the synchronous rectifier 538.

FIG. 6(e) shows the voltage waveform VQ4 and the current waveform IQ4 applied to the fourth switching element Q4.

In the boost mode, the controller 550 may control the first and fourth switching elements Q1 and Q4 and the second and third switching elements Q2 and Q3 in the full-bridge switching unit 532 to be alternately turned on, as shown in FIGS. 6(b) and 6(c).

The controller 550 may control the full-bridge switching unit 532 to operate at a minimum switching frequency and change turn-on duty of the switching elements in the synchronous rectifier 538 in the boost mode. FIG. 6(d) shows that the turn-on duty is DLb.

For example, the ninth and tenth switching elements Q9 and Q10 in the synchronous rectifier 538 are turned on with the duty thereof changing while the first and fourth switching elements Q1 and Q4 and the second and third switching elements Q2 and Q3 are alternately turned on.

When the ninth and tenth switching elements Q9 and Q10 in the synchronous rectifier 538 are turned on, energy is charged in the resonant inductor Lr. Accordingly, boosting is performed.

The controller 550 may control the turn-on duty DLb of the ninth and tenth switching elements Q9 and Q10 in the synchronous rectifier 538 to increase as the difference between the voltage of the DC-terminal capacitor C and the target voltage increases when the voltage of the DC-terminal capacitor C is lower than the target voltage.

Further, the controller 550 may control turn-on duty of switching elements in the synchronous rectifier 538 to increase as the difference between the voltage of the DC-terminal capacitor C and the target voltage increases when the voltage of the DC-terminal capacitor C is lower than the target voltage.

Accordingly, the difference between the voltage of the DC-terminal capacitor C and the target voltage can be reduced, and thus the DC-terminal voltage waveform Vdca with little ripples, as shown in FIG. 6(a), can be output.

At time T1 and time T2, zero-voltage turn-on switching 715a and 715b and zero-voltage turn-off switching 715a and 715b of the switching elements in the full-bridge switching unit 532 are performed. Accordingly, power conversion with high voltage boost and high efficiency can be performed.

FIG. 7 is a block diagram of the controller 550 of the power conversion device 500 according to the present disclosure.

Referring to the figure, the controller 550 may receive the input voltage Vc1 from the input voltage detector B and the DC-terminal voltage Vdc from the DC-terminal voltage detector D and control the full-bridge switching unit 532 to operate in the buck mode or the boost mode.

Particularly, the controller 550 may control the full-bridge switching unit 532 to operate in the buck mode or control the synchronous rectifier 538 to operate in the boost mode depending on the voltage level of the DC-terminal capacitor C.

Specifically, the controller 550 may control the full-bridge switching unit 532 to operate in the buck mode and control the full-bridge switching unit 532 and the synchronous rectifier 538 to operate at the first switching frequency when the voltage of the DC-terminal capacitor C is equal to or higher than a target voltage, and may control the synchronous rectifier 538 to operate in the boost mode and control the full-bridge switching unit 532 and the synchronous rectifier 538 to operate at the second switching frequency lower than the first switching frequency when the voltage of the DC-terminal capacitor C is lower than the target voltage.

The controller 550 may include a ripple compensator 910 for compensating for ripples of the DC-terminal capacitor C based on the detected DC-terminal voltage and the target voltage, and a pulse width modulation (PWM) controller 920 for controlling a pulse width with respect to the switching elements in the full-bridge switching unit 532.

For example, the ripple compensator 910 may determine that ripples increase as the difference between the detected DC-terminal voltage and the target voltage increases and compensate for ripples such that the ripples decrease.

The PWM controller 920 may set a phase shift value of the full-bridge switching unit 532 in the buck mode or turn-on duty of the switching elements in the synchronous rectifier 538 in the boost mode based on the compensated ripples.

Accordingly, the controller 550 may output the control signal Sfb to the full-bridge switching unit 532 in the converter 530 and output the control signal Shb to the synchronous rectifier 538 to control the synchronous rectifier 538.

Further, the controller 550 may control the full-bridge rectifier 532 to operate in the buck mode or boost mode depending on the level of the input voltage Vc1 or Vpv.

Specifically, the controller 550 may control the full-bridge switching unit 532 to operate in the buck mode and control the full-bridge switching unit 532 and the synchronous rectifier 538 to operate at the first switching frequency when the input voltage Vc1 or Vpv is equal to or higher than a reference voltage, and may control the synchronous rectifier 538 to operate in the boost mode and control the full-bridge switching unit 532 and the synchronous rectifier 538 to operate at the second switching frequency lower than the first switching frequency when the input voltage Vc1 or Vpv is lower than the reference voltage.

FIG. 8 is a flowchart illustrating a method of operating the photovoltaic module according to an embodiment of the present disclosure.

Referring to the figure, the input voltage detector B and the DC-terminal voltage detector D in the converter 530 respectively detect the input voltage Vc1 and the DC-terminal voltage Vdc (S1010).

Then, the controller 550 receives the input voltage Vc1 from the input voltage detector B and the DC-terminal voltage Vdc from the DC-terminal voltage detector D, selects a switching frequency (S1020), and determines whether to control the full-bridge switching unit 532 to operate in the buck mode (S1025).

For example, the controller 550 may control the full-bridge switching unit 532 to operate in the buck mode when the voltage of the DC-terminal capacitor C is equal to or higher than a target voltage (S1030). Here, the switching frequency of the full-bridge switching unit 532 and the synchronous rectifier 538, which is a half-bridge switching unit, may be the first switching frequency (e.g., 135 kHz).

When the voltage of the DC-terminal capacitor C is lower than the target voltage, the controller 550 may control the synchronous rectifier 538 to operate in the boost mode (S1035). Here, the switching frequency of the full-bridge switching unit 532 and the synchronous rectifier 538, which is a half-bridge switching unit, may be the second switching frequency (e.g., 90 kHz) lower than the first switching frequency (e.g., 135 kHz).

Description of operations in the buck mode and boost mode is omitted since the operations have been described with reference to FIGS. 4 to 7.

Subsequently, the controller 550 calculates a phase shift of the full-bridge switching unit 532 or turn-on duty of the synchronous rectifier 538 according to the buck mode or the boost mode (S1040).

Then, the controller 550 may output the control signal Sfb to the full-bridge switching unit 532 in the converter 530 and output the control signal Shb to the synchronous rectifier 538 in order to control the synchronous rectifier 538 based on the calculated phase shift or the calculated duty.

Accordingly, ripples in the DC-terminal voltage decrease, and thus a film capacitor instead of an electrolytic capacitor having large capacity can be used as the DC-terminal capacitor C. Therefore, the size of the DC-terminal capacitor C can be reduced.

FIG. 9 is a block diagram of the controller 550 in the power conversion device 500 according to the present disclosure.

Referring to FIG. 9, the controller 550 may include a calculation unit 705 for calculating a difference between an output current command value iacr and an output current ic3 flowing through the inverter 540 for first speed switching and second speed switching of the inverter 540, a current controller 710 for outputting a DC-terminal voltage command based on the difference, a voltage command compensator 720 for compensating for a voltage command based on the DC-terminal voltage command and the voltage across the DC-terminal capacitor C, a first speed switch driving signal generator 730 for outputting a first speed switching driving signal at the first switching frequency based on an output value from the voltage command compensator 720, and a second speed switch driving signal generator 740 for outputting a second speed switching driving signal at the second switching frequency based on the output value from the voltage command compensator 720.

That is, a switching control signal for operating the seventh and eighth switching elements S3 and S4 in the inverter 540 may be output through the first speed switch driving signal generator 730 and a switching control signal for operating the fifth and sixth switching elements S1 and S2 in the inverter 540 may be output through the second speed switch driving signal generator 740.

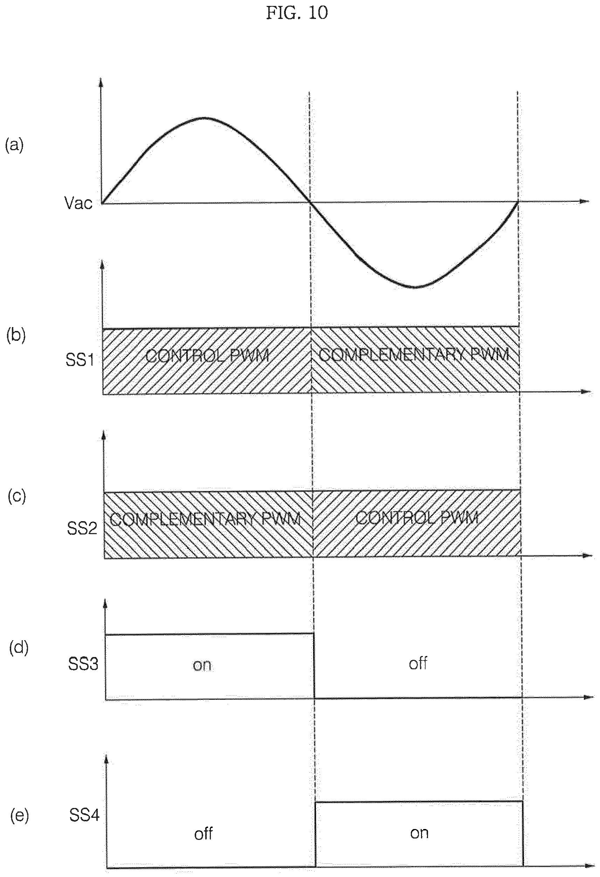

FIG. 10 is a diagram showing driving signals applied to the gates of the fifth to eighth switching elements S1 to S4 during one cycle of an output current Vac output from the inverter 540.

During a positive half cycle of the output current Vac output from the inverter 540, as shown in FIG. 10(a), a driving signal SS3 applied to the seventh switching element S3 has a high level and thus the seventh switching element S3 can be continuously turned on.

The controller 550 may control the fifth switching element S1 and the sixth switching element S2 to perform switching according to PWM control while the seventh switching element S3 is turned on.

Here, since the fifth switching element S1 and the sixth switching element S2 complementarily operate, a driving signal applied to the sixth switching element S2 may be a driving signal SS2 for complementary PWM when a driving signal applied to the fifth switching element S1 is a driving signal SS1 for control PWM, as shown.

The seventh switching element S3 and the eighth switching element S4 also complementarily operate, and thus the eighth switching element S4 is turned off while the seventh switching element S3 is turned on.

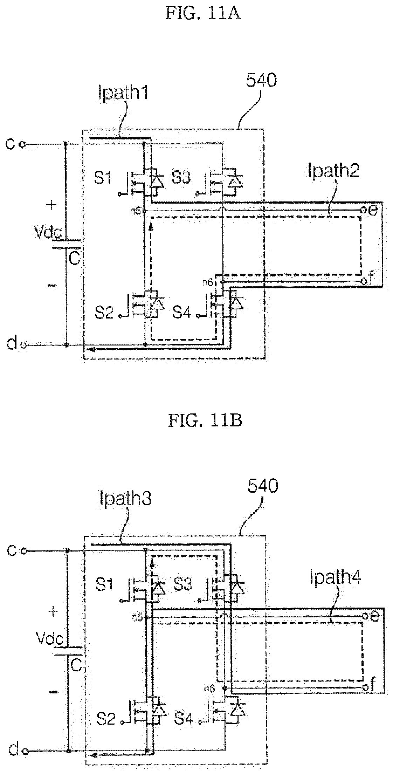

When the fifth switching element S1 is turned on and the sixth switching element S2 is turned off while the fifth and sixth switching elements S1 and S2 perform PWM switching during the positive half cycle of the output current Vac, a current path Ipath1 through the fifth switching element S1 and the eighth switching element S4 can be generated, as shown in FIG. 11A.

When the sixth switching element S2 is turned on and the fifth switching element S1 is turned off while the fifth and sixth switching elements S1 and S2 perform PWM switching during the positive half cycle of the output current Vac, a current path Ipath2 through the eighth switching element S4 and the sixth switching element S2 can be generated, as shown in FIG. 11A.

During a negative half cycle of the output current Vac output from the inverter 540, as shown in FIG. 10(a), a driving signal SS4 applied to the eighth switching element S4 has a high level and thus eighth switching element S4 can be continuously turned on.

The controller 550 may control the sixth switching element S2 and the fifth switching element S1 to perform switching according to PWM control while eighth switching element S4 is turned on.

Here, since the fifth switching element S1 and the sixth switching element S2 complementarily operate, the driving signal applied to the fifth switching element S1 may be a driving signal SS1 for complementary PWM when the driving signal applied to the sixth switching element S2 is a driving signal SS2 for control PWM, as shown.

The seventh switching element S3 and the eighth switching element S4 also complementarily operate, and thus the seventh switching element S3 is turned off while the eighth switching element S4 is turned on.

When the sixth switching element S2 is turned on and the fifth switching element S1 is turned off while the fifth and sixth switching elements S1 and S2 perform PWM switching during the negative half cycle of the output current Vac, a current path Ipath3 through the seventh switching element S3 and the sixth switching element S2 can be generated, as shown in FIG. 11B.

When the fifth switching element S1 is turned on and the sixth switching element S2 is turned off while the fifth and sixth switching elements S1 and S2 perform PWM switching during the negative half cycle of the output current Vac, a current path Ipath4 through the seventh switching element S3 and the fifth switching element S1 can be generated, as shown in FIG. 11B.

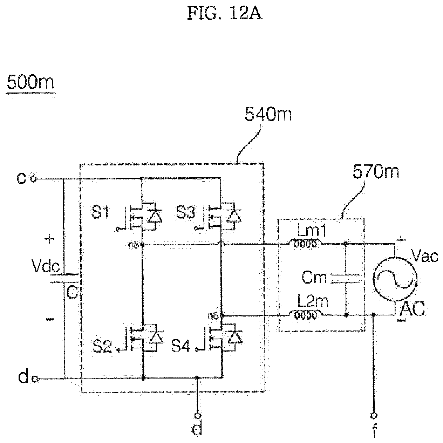

FIG. 12A is a diagram showing an inverter 540m and a filter 570m of a power conversion device 500m compared with the present disclosure.

The inverter 540m shown in FIG. 12A is similar to that of the present application but the filter 570m differs from that of the present application in that the filter 570m is configured in a symmetrical form.

That is, the filter 570m shown in FIG. 12A may include first and second inductors Lm1 and Lm2 respectively provided at both terminals of the inverter 540m, and a capacitor Cm connected between the first and second inductors Lm1 and Lm2.

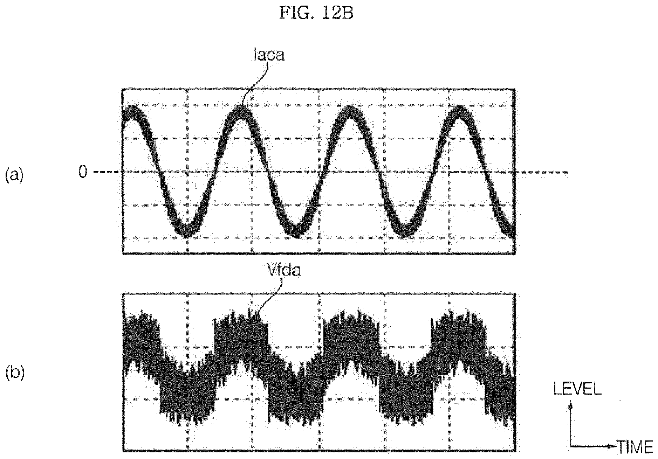

In the inverter 540 according to the present disclosure, some legs (the seventh and eighth switching elements S3 and S4) perform first speed switching and other legs (the fifth and sixth switching elements S1 and S2) perform second speed switching according to asynchronous PWM, as described above. Accordingly, an output current waveform Iaca and a common mode voltage waveform Vfda as shown in FIG. 12B may appear when a symmetrical filter such as the filter 570m of FIG. 12A is used.

Particularly, it can be known from the common mode voltage waveform Vfda that a common mode voltage considerably increases.

To solve such a problem, the present disclosure uses the asymmetrical filter 570 corresponding to the asynchronous inverter 540.

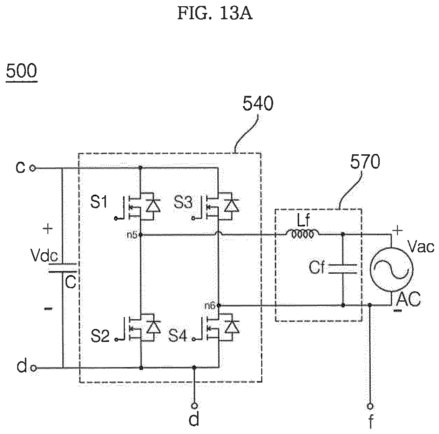

FIG. 13A illustrates the inverter 540 and the filter 570 in the power conversion device 500 according to the present disclosure.

The filter 570 according to an embodiment of the present disclosure may include an inductor Lf connected to one of the output terminals of the inverter 540, and a capacitor Cf connected between the inductor Lf and the other output terminal of the inverter 540.

Particularly, since the inductor Lf is connected to only one of the output terminals of the inverter 540, a common mode voltage caused by the inverter 540 which asynchronously operates according to second speed switching and first speed switching can be considerably reduced.

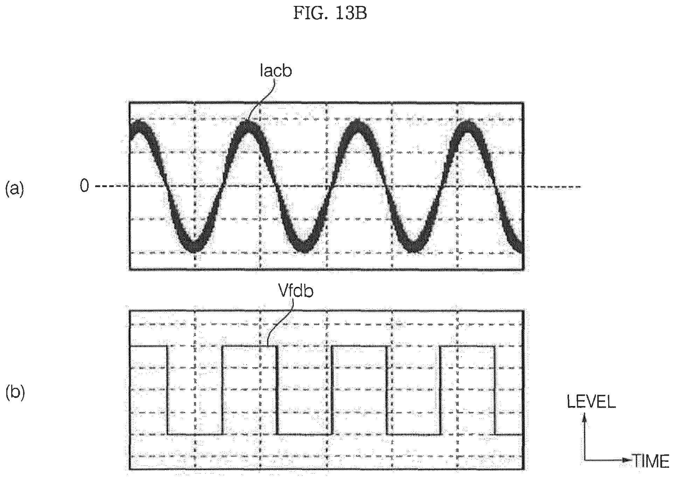

FIG. 13B shows an output current waveform Iacb and a common mode voltage waveform Vfdb according to the inverter 540 and the filter 570 shown in FIG. 13A. It can be known from the figure that the common mode voltage can be considerably reduced according to the inverter 540 and the filter 570 shown in FIG. 13A.

Meanwhile, the controller 550 according to an embodiment of the present disclosure controls ripples in the voltage of the DC-terminal capacitor to decrease.

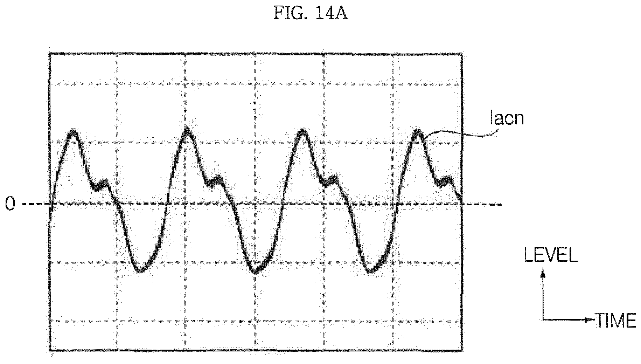

FIG. 14A shows a system output current Iacn when control for decreasing ripples in the voltage of the DC-terminal capacitor is not performed.

Referring to FIG. 14A, it can be known that output current is distorted due to harmonic components THD in the system output current Iacn.

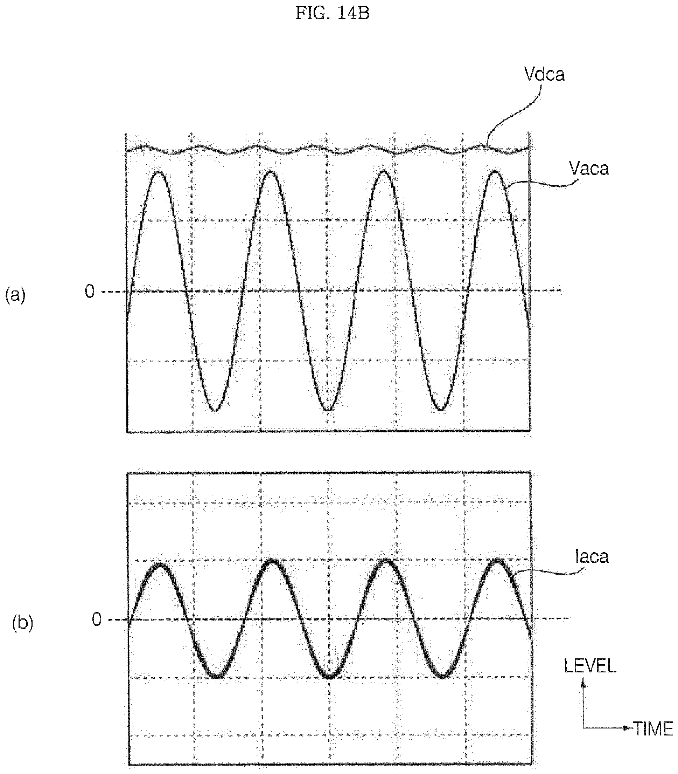

FIG. 14B shows a DC-terminal voltage waveform Vdca, a system output voltage waveform Vaca, and a system output current waveform Iaca when control for decreasing ripples in the voltage of the DC-terminal capacitor is performed.

Referring to FIG. 14B, it can be known that the DC-terminal voltage waveform Vdca has little ripples and the system output voltage waveform Vaca and the system output current waveform Iaca are hardly distorted. That is, it can be known that harmonic components THD in the system output current Iacn are removed.

FIG. 15 is a diagram showing a power conversion device according to an embodiment of the present disclosure, and FIGS. 16 to 18B are diagrams referred to for describing the operation of FIG. 15.

First, referring to FIG. 15, a power conversion device 500ma according to an embodiment of the present disclosure may include an inverter 540 that converts DC power based on the solar cell module 100 into AC power (Vacm), and a controller 550 that controls the inverter 540.

The inverter 540 may include fifth and sixth switching elements S1 and S2 connected to each other in series, and seventh and eighth switching elements S3 and S4 connected to the fifth and sixth switching elements S1 and S2 in parallel and connected to each other in series.

The fifth and sixth switching elements S1 and S2 may be called first leg and the seventh and eighth switching elements S3 and S4 may be called second leg.

As described above, the controller 550 may control the fifth and sixth switching elements S1 and S2 to perform second speed switching and may control the seventh and eighth switching elements S3 and S4 to perform first speed switching at a switching frequency lower than that of the fifth and sixth switching elements S1 and S2. Such a control technique may be referred to as asynchronous PWM control.

The controller 550 may control the inverter 540 to perform the asynchronous PWM control in order to decrease the size of the power conversion device 500ma.

Meanwhile, the controller 550 may control the switching frequency of the seventh and eighth switching elements S3 and S4 to be same. Particularly, the controller 550 may control the switching frequency of the seventh and eighth switching elements S3 and S4 to be the same as a grid frequency. For example, it is possible to control the seventh and eighth switching elements S3 and S4 to be switched at a switching frequency of 60Hz.

Meanwhile, in second speed switching of the fifth and sixth switching elements S1 and S2, when they are switched at a uniform switching frequency, the operation efficiency of the inverter may be reduced due to a loss of conduction and a loss of switching.

In the present disclosure, in order to prevent a decrease in operation efficiency of the inverter, a switching frequency is varied in second speed switching of the fifth and sixth switching elements S1 and S2.

Particularly, the controller 550 may change the switching frequency of the fifth and sixth switching elements S1 and S2 in accordance with the level of the AC power Vacm output from the inverter 540.

FIG. 16(a) is an example of an AC power waveform Vacm output from the inverter 540 and FIG. 16(b) is an example of a switching frequency waveform fm of the fifth and sixth switching elements S1 and S2.

In FIG. 16(a), the AC power waveform Vacm output from the inverter 540 may be divided into a first period Pda including a zero-crossing point ZC of the AC power Vacm output from the inverter 540 in accordance with AC power, and a second period Pdb including a maximum point pka or a minimum point pkb of the AC power Vacm output from the inverter 540.

Meanwhile, the first period Pda including a zero-crossing point ZC of the AC power Vacm output from the inverter 540 has a defect that the loss of switching of the fifth and sixth switching elements S1 and S2 is low, but the loss of conduction is high.

Meanwhile, the second period Pdb including a maximum point pka or a minimum point pkb of the AC power Vacm output from the inverter 540 has a defect that the loss of conduction of the fifth and sixth switching elements S1 and S2 is low, but the loss of switching is high.

Accordingly, the present disclosure proposes a method of reducing the loss of conduction in the first period Pda. Further, the present disclosure proposes a method of reducing the loss of switching in the second period Pdb.

To this end, the controller 550 controls the switching frequency of at least some switching elements S1 and S2 in the inverter 540 in the period Pdb including a maximum point pka or a minimum point pkb of the AC power Vacm output from the inverter 540. Accordingly, in the period Pdb including a maximum point pka or a minimum point pkb of the AC power Vacm at which a loss of switching is high, the loss of switching can be reduced, so the operation efficiency of the inverter 540 can be improved.

Particularly, the controller 550, as in FIG. 16(b), may control the switching frequency of at least some switching elements S1 and S2 in the inverter 540 to be lowest at the maximum point pka or the minimum point pkb of the AC power Vacm output from the inverter 540. Accordingly, in the period Pdb including a maximum point pka or a minimum point pkb of the AC power Vacm at which a loss of switching is high, the loss of switching can be reduced, so the operation efficiency of the inverter 540 can be improved.

Meanwhile, the controller 550 may control the switching frequency of some switching elements S1 and S2 in the inverter 540 in the second period Pdb to be lower than that of the first period Pda among the first period Pda including a zero-crossing point ZC of the AC power Vacm output from the inverter 540 and the second period Pdb including a maximum point pka or a minimum point pkb of the AC power Vacm output from the inverter 540.

Accordingly, it is possible to reduce the loss of switching in the second period Pdb including a maximum point pka or a minimum point pkb of the AC power Vacm at which a loss of switching is high, and it is possible to reduce the loss of conduction in the first period Pda including a maximum point pka or a minimum point pkb of the AC power Vacm at which the loss of conduction is high, so the operation efficiency of the inverter 540 may be improved.

Meanwhile, the controller 550 may control the fifth and sixth switching elements S1 and S2 perform second speed switching more than the seventh and eighth switching elements S3 and S4, and may control the fifth and sixth switching elements S1 and S2 of the inverter 540 to be variable in the period Pdb including a maximum point pka or a minimum point pkb of the AC power Vacm output from the inverter 540. Accordingly, it is possible to reduce a loss of switching of the switching frequency of the fifth and sixth switching elements S1 and S2, so the operation efficiency of the inverter 540 may be improved.

Meanwhile, the controller 550 may control the switching frequency of the seventh and eighth switching elements S3 and S4 to be the same as a grid frequency, and particularly, may control the switching frequency of the seventh and eighth switching elements S3 and S4 to be same. Accordingly, it is possible to reduce the size of the power conversion device by performing asynchronous PWM control.

Meanwhile, the eighth switching elements S1∼S4 in the fifth switching element may include a GaN transistor. Accordingly, it is possible to a reverse recovery loss in second speed switching.

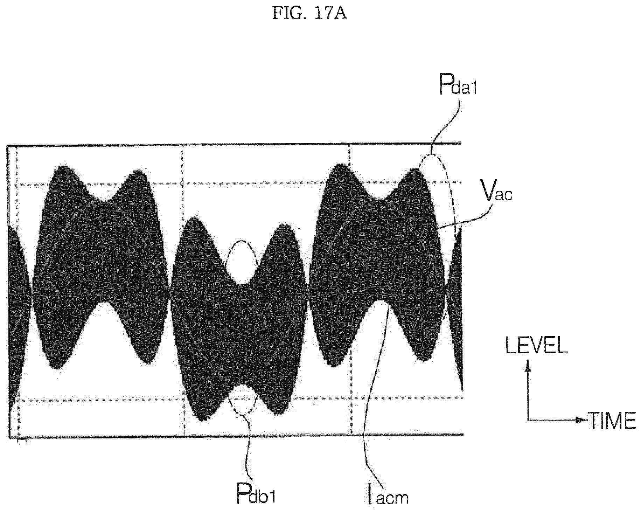

FIG. 17A is a diagram showing an output voltage waveform Vac and output current waveform Iacm of the inverter 540.

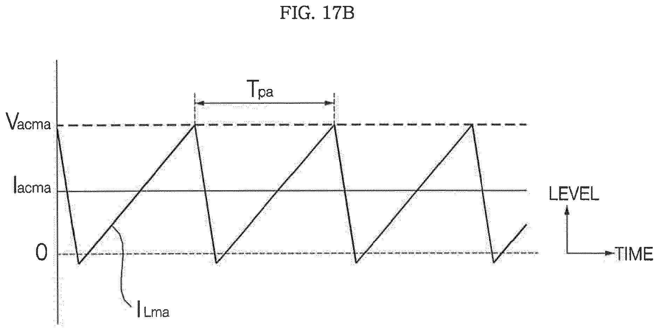

An inductor current waveform Ilma corresponding to the second period Pdb1 including a maximum point pka or a minimum point pkb of the AC power Vacm output from the inverter 540 in the output voltage waveform Vac in FIG. 17A is exemplified as in FIG. 17B.

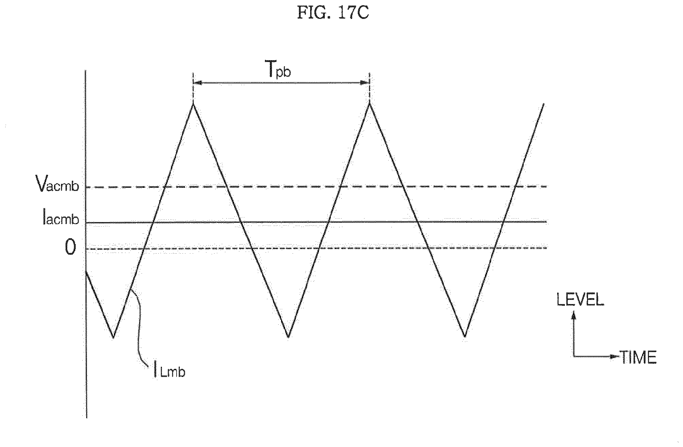

Meanwhile, an inductor current waveform Ilmb corresponding to the first period Pdal including a zero-crossing point ZC of the AC power Vacm output from the inverter 540 in the output voltage waveform Vac in FIG. 17A is exemplified as in FIG. 17C.

Comparing FIGS. 17B and 17C, it can be seen that the inductor current waveform Ilmb of FIG. 17C is larger than the inductor current waveform Ilma of FIG. 17B.

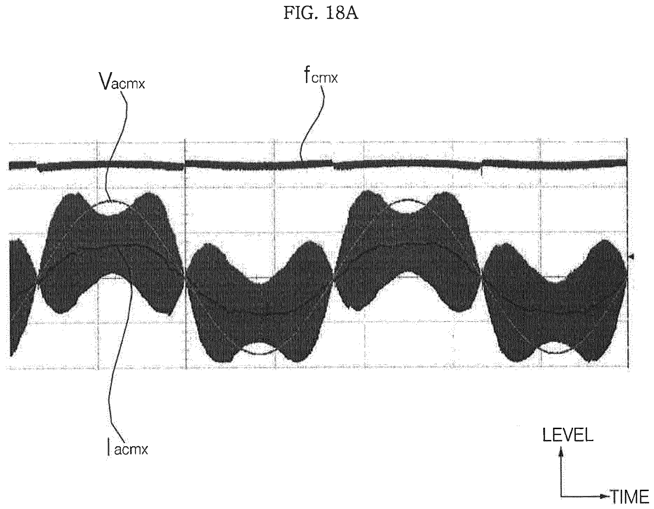

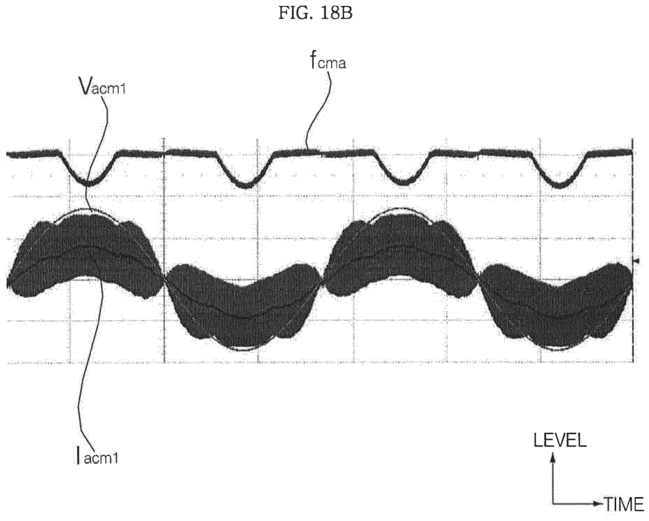

FIG. 18A exemplifies output voltage Vacmx and output current Iacmx waveforms when the fifth and sixth switching elements S1 and S2 operate as at a fixed switching frequency, and FIG. 18B exemplifies output voltage Vacm1 and output current Iacm1 waveforms when the fifth and sixth switching elements S1 and S2 operate at a variable switching frequency.

As described above, since the switching frequency of the fifth and sixth switching elements S1 and S2 is varied, a loss of conduction and a loss of switching are reduced, so the operation efficiency of the inverter 540 may be improved. Accordingly, as in FIG. 18B, stable output voltage Vacm1 and output current Iacm1 waveforms may be output to a system.

FIG. 19 is an exploded perspective view of the solar cell module of FIG. 1A or FIG. 1B.

Referring to FIG. 19, the solar cell module 100 of FIGS. 1A and 1B may include a plurality of solar cells 130. In addition, the solar cell module 100 may further include a first sealant 120 and a second sealant 150 provided on the upper surface and the lower surface of the solar cells 130, a rear substrate 110 provided under the first sealant 120, and a front substrate 160 provided on the second sealant 150.

The solar cell 130 is a semiconductor device which converts solar energy into electric energy and may be a silicon solar cell, a compound semiconductor solar cell, a tandem solar cell, a dye-sensitized solar cell, a CdTe solar cell, a CIGS solar cell or a thin film solar cell.

The solar cell 130 is formed on a light-receiving surface to which sunlight is input and a rear surface opposite the light-receiving surface. For example, the solar cell 130 may include a first conductivity type silicon substrate, a second conductivity type semiconductor layer which is formed on the silicon substrate and has a conductivity type opposite the first conductivity type, an antireflection film which includes at least one opening for partially exposing the second conductivity type semiconductor layer and is formed on the second conductivity type semiconductor layer, a front electrode contacting a portion of the second conductivity type semiconductor layer exposed through the at least one opening, and a rear electrode formed on the rear side of the silicon substrate.

The solar cells 130 may be electrically connected in series or parallel, or in serial-parallel. Specifically, the plurality of solar cells 130 may be electrically connected through the ribbon 133. The ribbon 133 may be attached to the front electrode formed on the light-receiving surface of a solar cell 130 and a rear electrode formed on the rear side of a neighboring solar cell 130.

The figure shows that the ribbon 133 is formed in two lines and the solar cells 130 are connected in a row through the ribbon 133 to form a solar cell string 140.

In this manner, six strings 140a, 140b, 140c, 140d, 140e and 140f are formed and each string may include ten solar cells, as described above with reference to FIG. 2.

The rear substrate 110 is a back sheet and serves to execute waterproofing, insulation and sunblocking functions. The rear substrate 110 may be a Tedlar/PET/Tedlar (TPT) type but the present disclosure is not limited thereto. In addition, although the rear substrate 110 is rectangular in FIG. 4, the rear substrate 110 may be manufactured in various forms such as a circle and a semicircle according to environment in which the solar cell module 100 is installed.

The first sealant 120 may be attached to the rear substrate 110 having the same size as the rear substrate 110, and a plurality of solar cells 130 may be arranged in several rows on the first sealant 120.

The second sealant 150 is positioned on the solar cells 130 and attached to the first sealant 120 through lamination.

Here, the first sealant 120 and the second sealant 150 are used to chemically connect elements of the solar cells. Various materials such as ethylene vinyl acetate (EVA) film may be used as the first sealant 120 and the second sealant 150.

The front substrate 160 is positioned on the second sealant 150 such that sunlight is transmitted through the front substrate 160. It is desirable that the front substrate 160 be tempered glass in order to protect the solar cells 130 from external impact. It is more desirable that the front substrate 160 be low-iron tempered glass in order to prevent reflection of sunlight and to improve transmissivity of sunlight.

The photovoltaic module according to the present disclosure is not limited to the above-described embodiments and all or some of the embodiments may be selectively combined such that the embodiments can be modified in various manners.

Although the preferred embodiments of the present disclosure have been disclosed for illustrative purposes, those skilled in the art will appreciate that various modifications, additions and substitutions are possible, without departing from the scope and spirit of the invention as disclosed in the accompanying claims.

The photovoltaic module according to an embodiment of the present disclosure includes: a solar cell module including a plurality of solar cells; a converter to convert a level of a DC power input from the solar cell module; an inverter to convert the DC power into an AC power; and a controller to control the inverter, in which the controller performs asynchronous pulse width modulation control for the inverter, and controls a switching frequency of at least some switching elements in the inverter to be changed for a period including a maximum point or a minimum point of the AC power output from the inverter. Accordingly, it is possible to reduce a loss of switching in a period including a maximum point or a minimum point of AC power at which a loss of switching is high, so operation efficiency of the inverter can be improved.

The controller controls a switching frequency of at least some switching elements in the inverter to be lowest at the maximum point or the minimum point of the AC power output from the inverter. Accordingly, it is possible to reduce a loss of switching in a period including a maximum point or a minimum point of AC power at which a loss of switching is high, so operation efficiency of the inverter can be improved.

The controller controls the switching frequency of at least some switching elements in the inverter in the second period to be lower than that of the first period among the first period including a zero-crossing point of the AC power output from the inverter and the second period including a maximum point or a minimum point of the AC power output from the inverter. Accordingly, in the second period including a maximum point or a minimum point of the AC power at which a loss of switching is high, the loss of switching can be reduced. Further, in the first period including a maximum point or a minimum point of the AC power at which a loss of conduction is high, a loss of conduction can be reduced, so operation efficiency of the inverter can be improved.

The controller controls the first and second switching elements to perform second speed switching more than the third and fourth switching elements, and controls a switching frequency of the first and second switching elements of the inverter to be changed for a period including a maximum point or a minimum point of the AC power output from the inverter. Accordingly, it is possible to reduce a loss of switching of the switching frequency of the first and second switching elements, so the operation efficiency of the inverter may be improved.

Meanwhile, the controller can control the switching frequency of the third and fourth switching elements to be the same as a grid frequency, and particularly, the switching frequency of the third and fourth switching elements to be same. Accordingly, it is possible to reduce the size of the power conversion device by performing asynchronous pulse width-variable control.

The first switching element to the fourth switching element may include a gallium nitride (GaN) transistor. Accordingly, it is possible to a reverse recovery loss in second speed switching.

## Claims

1. A photovoltaic module (50) comprising:
a solar cell module (100) including a plurality of solar cells;
a converter (530) configured to convert a level of a DC power input from the solar cell module;
a DC-terminal capacitor (C) configured to store DC power output from the converter;
an inverter (540) configured to convert the DC power into an AC power; and
a controller (550) configured to control the inverter,
wherein the controller (550) is configured to perform asynchronous pulse width modulation control for the inverter, and to control a switching frequency of at least some switching elements in the inverter to be changed for a period including a maximum point (pka) with a corresponding voltage (Vpka) or a minimum point (pkb) with a corresponding voltage (Vpkb) of the AC power output from the inverter,
wherein the converter (530) includes:
a full-bridge switching device (532) configured to switch the DC power;
a transformer (536) having an input side connected to an output terminal of the full-bridge switching unit;
a synchronous rectifier (538) connected to an output side of the transformer; and
a resonant capacitor (Cr) and a resonant inductor (Lr) connected between the transformer and the synchronous rectifier, and
the controller (550) is configured to change a switching frequency of the full-bridge switching unit based on an input voltage of the converter or a voltage of the DC-terminal capacitor,
wherein the controller (550) is configured to control the full-bridge switching unit to operate in a buck mode, and the full-bridge switching unit and the synchronous rectifier to operate at a first switching frequency when a voltage of the DC-terminal capacitor is a target voltage or more, and to control the synchronous rectifier to operate in a boost mode, and the full-bridge switching unit and the synchronous rectifier to operate at a second switching frequency lower than the first switching frequency when the voltage of the DC-terminal capacitor (C) is lower than the target voltage.

2. The photovoltaic module of claim 1, wherein the controller (550) is configured to control a switching frequency of at least some switching elements in the inverter to be lowest at the maximum point or the minimum point of the AC power output from the inverter.

3. The photovoltaic module of claim 2, wherein a switching frequency of at least some switching elements in the inverter at the maximum point or the minimum point of the AC power output from the inverter is higher than a grid frequency.

4. The photovoltaic module of any one preceding claim, wherein the AC power output from the inverter includes a first period including a zero-crossing point of the AC power and a second period including a maximum point or a minimum point of the AC power,
wherein the controller (550) is configured to control the switching frequency of at least some switching elements in the inverter in the second period to be lower than the switching frequency of at least some switching elements in the inverter in the first period.

5. The photovoltaic module of any one preceding claim, wherein the inverter (540) includes:
first and second switching elements connected to each other in series; and
third and fourth switching elements connected to the first and second switching elements in parallel and connected to each other in series, and
the controller (550) is configured to control the first and second switching elements to perform second speed switching more than the third and fourth switching elements, and to control a switching frequency of the first and second switching elements of the inverter to be changed for a period including a maximum point or a minimum point of the AC power output from the inverter.

6. The photovoltaic module of claim 5, wherein the controller (550) is configured to control a switching frequency of the third and fourth switching elements to be the same as a grid frequency.

7. The photovoltaic module of claim 5 or 6, wherein the controller (550) is configured to control a switching frequency of the third and fourth switching elements to be the same.

8. The photovoltaic module of any one of claims 5 to 7, wherein the first switching element to the fourth switching element include a gallium nitride (GaN) transistor.

9. The photovoltaic module of any one of claims 5 to 8,
wherein the controller (550) includes:
a current controller (710) configured to output a DC-terminal voltage command based on an output current flowing to the inverter;
a voltage command compensator (720) configured to compensate for a voltage command based on voltages at both terminals of the DC-terminal capacitor;
a first speed switch driving signal generator (730) configured to output a first speed switch driving signal in accordance with the first switching frequency based on an output value from the voltage command compensator; and
a second speed switch driving signal generator (740) configured to output a second speed switch driving signal in accordance with the second switching frequency based on an output from the voltage command compensator.

10. The photovoltaic module of claim 1, wherein the controller (550), in the buck mode, is configured to operate the full-bridge switching unit at a maximum switching frequency and changes a phase difference of switching elements in the full-bridge switching unit.

11. The photovoltaic module of claim 1 or 10, wherein the controller (550), in the boost mode, is configured to operate the full-bridge switching unit at a minimum switching frequency and to change a turn-on duty of switching elements in the synchronous rectifier.

## Patentansprüche

1. Photovoltaikmodul (50) umfassend:
ein Solarzellenmodul (100) mit einer Mehrzahl von Solarzellen;
einen Wandler (530), der eingerichtet ist, um einen Pegel eines Gleichstromeingangs vom Solarzellenmodul umzuwandeln;
einen Gleichstromanschlusskondensator (C), der eingerichtet ist, um den vom Wandler ausgegebenen Gleichstrom zu speichern;
einen Wechselrichter (540), der eingerichtet ist, um den Gleichstrom in einen Wechselstrom umzuwandeln; und
eine Steuerung (550), die eingerichtet ist, um den Wechselrichter zu steuern,
wobei die Steuerung (550) eingerichtet ist, um eine asynchrone Pulsbreitenmodulationssteuerung für den Wechselrichter durchzuführen und eine Schaltfrequenz von zumindest einigen Schaltelementen in dem Wechselrichter zu steuern, die für eine Periode einschließlich eines Maximalpunkts, pka, mit einer entsprechenden Spannung, Vpka, oder eines Minimalpunkts, pkb, mit einer entsprechenden Spannung, Vpkb, des vom Wechselrichter ausgegebenen Wechselstroms geändert werden sollen,
wobei der Wandler (530) umfasst:
eine Vollbrückenschaltvorrichtung (532), die zum Schalten des Gleichstroms eingerichtet ist;
einen Transformator (536) mit einer Eingangsseite, die mit einem Ausgangsanschluss der Vollbrückenschalteinheit verbunden ist;
einen Synchrongleichrichter (538), der mit einer Ausgangsseite des Transformators verbunden ist; und
einen Resonanzkondensator (Cr) und eine Resonanzinduktivität (Lr), die zwischen dem Transformator und dem Synchrongleichrichter geschaltet sind, und
die Steuerung (550) eingerichtet ist, um eine Schaltfrequenz der Vollbrückenschalteinheit basierend auf einer Eingangsspannung des Wandlers oder einer Spannung des Gleichstromanschlusskondensators zu ändern,
wobei die Steuerung (550) so eingerichtet ist, dass sie die Vollbrückenschalteinheit steuert, um in einem Abwärtswandler-Modus zu arbeiten, und die Vollbrückenschalteinheit und den Synchrongleichrichter steuert, um an einer ersten Schaltfrequenz zu arbeiten, wenn eine Spannung des Gleichstromanschlusskondensators eine Zielspannung oder mehr ist, und dass sie den Synchrongleichrichter steuert, um in einem Aufwärtswandler-Modus zu arbeiten, und die Vollbrückenschalteinheit und den Synchrongleichrichter steuert, um an einer zweiten Schaltfrequenz zu arbeiten, die niedriger als die erste Schaltfrequenz ist, wenn die Spannung des Gleichstromanschlusskondensators (C) niedriger als die Zielspannung ist.

2. Photovoltaikmodul nach Anspruch 1, wobei die Steuerung (550) eingerichtet ist, um eine Schaltfrequenz von zumindest einigen Schaltelementen in dem Wechselrichter so zu steuern, dass sie am Maximalpunkt oder am Minimalpunkt des vom Wechselrichter ausgegebenen Wechselstroms am niedrigsten ist.

3. Photovoltaikmodul nach Anspruch 2, wobei eine Schaltfrequenz von zumindest einigen Schaltelementen im Wechselrichter am Maximalpunkt oder am Minimalpunkt des vom Wechselrichter abgegebenen Wechselstroms höher als eine Netzfrequenz ist.

4. Photovoltaikmodul nach einem der vorhergehenden Ansprüche, wobei der vom Wechselrichter ausgegebene Wechselstrom eine erste Periode einschließlich eines Nulldurchgangspunkts des Wechselstroms und eine zweite Periode einschließlich eines Maximalpunkts oder eines Minimalpunkts des Wechselstroms umfasst,
wobei die Steuerung (550) eingerichtet ist, um die Schaltfrequenz von zumindest einigen Schaltelementen in dem Wechselrichter in der zweiten Periode so zu steuern, dass sie niedriger als die Schaltfrequenz von zumindest einigen Schaltelementen in dem Wechselrichter in der ersten Periode ist.

5. Photovoltaikmodul nach einem der vorhergehenden Ansprüche, wobei der Wechselrichter (540) umfasst:
ein erstes und ein zweites Schaltelement, die miteinander in Reihe geschaltet sind; und
ein drittes und ein viertes Schaltelement, das mit dem ersten und dem zweiten Schaltelement parallelgeschaltet sind und miteinander in Reihe geschaltet sind, und
die Steuerung (550) eingerichtet ist, um das erste und zweite Schaltelement zu steuern, um ein zweites Geschwindigkeitsschalten mehr als das dritte und das vierte Schaltelement durchzuführen, und eine Schaltfrequenz des ersten und des zweiten Schaltelements des Wechselrichters zu steuern, die für eine Periode einschließlich eines Maximalpunkts oder eines Minimalpunkts des vom Wechselrichter ausgegebenen Wechselstroms geändert werden soll.

6. Photovoltaikmodul nach Anspruch 5, wobei die Steuerung (550) eingerichtet ist, um eine Schaltfrequenz des dritten und des vierten Schaltelements so zu steuern, dass sie gleich einer Netzfrequenz ist.

7. Photovoltaikmodul nach Anspruch 5 oder 6, wobei die Steuerung (550) eingerichtet ist, um eine Schaltfrequenz des dritten und des vierten Schaltelements so zu steuern, dass sie gleich ist.

8. Photovoltaikmodul nach einem der Ansprüche 5 bis 7, wobei das erste Schaltelement bis vierte Schaltelement einen Galliumnitrid-, GaN, Transistor enthalten.

9. Photovoltaikmodul nach einem der Ansprüche 5 bis 8,
wobei die Steuerung (550) umfasst:
eine Stromsteuerung (710), die eingerichtet ist, um einen Gleichstromanschlussspannungsbefehl basierend auf einem zum Wechselrichter fließenden Ausgangsstrom auszugeben;
einen Spannungsbefehlskompensator (720), der eingerichtet ist, um einen Spannungsbefehl basierend auf Spannungen an beiden Anschlüssen des Gleichstromanschlusskondensators zu kompensieren;
einen ersten Geschwindigkeitsschalter-Steuersignalgenerator (730), der eingerichtet ist, um ein erstes Geschwindigkeitsschalter-Steuersignal gemäß der ersten Schaltfrequenz basierend auf einem Ausgangswert vom Spannungsbefehlskompensator auszugeben; und
einen zweiten Geschwindigkeitsschalter-Steuersignalgenerator (740), der eingerichtet ist, um ein zweites Geschwindigkeitsschalter-Steuersignal gemäß der zweiten Schaltfrequenz basierend auf einem Ausgangswert des Spannungsbefehlskompensators auszugeben.

10. Photovoltaikmodul nach Anspruch 1, wobei die Steuerung (550) im Abwärtswandler-Modus eingerichtet ist, um die Vollbrückenschalteinheit bei einer maximalen Schaltfrequenz zu betreiben und eine Phasendifferenz von Schaltelementen in der Vollbrückenschaltungseinheit zu ändern.

11. Photovoltaikmodul nach Anspruch 1 oder 10, wobei die Steuerung (550) im Aufwärtswandler-Modus eingerichtet ist, um die Vollbrückenschalteinheit bei einer minimalen Schaltfrequenz zu betreiben und eine Einschalttastung von Schaltelementen im Synchrongleichrichter zu ändern.

## Revendications

1. Module photovoltaïque (50) comprenant :
un module de cellules solaires (100) comprenant une pluralité de cellules solaires ;
un convertisseur (530) conçu pour convertir un niveau d'une entrée de puissance en CC du module de cellules solaires ;
un condensateur de borne CC (C) conçu pour accumuler une sortie de puissance en CC du convertisseur ;
un onduleur (540) conçu pour convertir la puissance en CC en une puissance en CA ; et
un contrôleur (550) conçu pour commande l'onduleur,
dans lequel le contrôleur (550) est conçu pour effectuer une commande de modulation de largeur d'impulsion asynchrone pour l'onduleur, et pour commander une fréquence de commutation d'au moins certains éléments de commutation dans l'onduleur à changer pendant une période comprenant un point maximum (pka) avec une tension correspondante (Vpka) ou un point minimum (pkb) avec une tension correspondante (Vpkb) de la sortie de puissance en CA de l'onduleur,
dans lequel le convertisseur (530) comprend :
un dispositif de commutation en pont complet (532) conçu pour commuter la puissance en CC ;
un transformateur (536) ayant un côté entrée connecté à une borne de sortie de l'unité de commutation en pont complet ;
un redresseur synchrone (538) connecté à un côté sortie du transformateur ; et
un condensateur résonnant (Cr) et un inducteur résonnant (Lr) connectés entre le transformateur et le redresseur synchrone, et
le contrôleur (550) est conçu pour changer une fréquence de commutation de l'unité de commutation en pont complet sur la base d'une tension d'entrée du convertisseur ou d'une tension du condensateur de borne CC,
dans lequel le contrôleur (550) est conçu pour commander l'unité de commutation en pont complet pour qu'elle fonctionne selon un mode dévolteur, et l'unité de commutation en pont complet et le redresseur synchrone pour qu'ils fonctionnent à une première fréquence de commutation lorsqu'une tension du condensateur de borne CC est une tension cible ou plus, et pour commander le redresseur synchrone pour qu'il fonctionne selon un mode survolteur, et l'unité de commutation en pont complet et le redresseur synchrone pour qu'ils fonctionnent à une seconde fréquence de commutation inférieure à la première fréquence de commutation lorsque la tension du condensateur de borne CC (C) est inférieure à la tension cible.

2. Module photovoltaïque selon la revendication 1, dans lequel le contrôleur (550) est conçu pour commander une fréquence de commutation d'au moins certains éléments de commutation dans l'onduleur pour qu'elle soit la plus basse au point maximum ou au point minimum de la sortie de puissance en CA de l'onduleur.

3. Module photovoltaïque selon la revendication 2, dans lequel une fréquence de commutation d'au moins certains éléments de commutation dans l'onduleur au point maximum ou au point minimum de la sortie de puissance en CA de l'onduleur est supérieure à une fréquence du réseau.

4. Module photovoltaïque selon l'une quelconque des revendications précédentes, dans lequel la sortie de puissance en CA de l'onduleur comprend une première période comprenant un point de passage par zéro de la puissance en CA et une seconde période comprenant un point maximum ou un point minimum de la puissance en CA,
dans lequel le contrôleur (550) est conçu pour commander la fréquence de commutation d'au moins certains éléments de commutation dans l'onduleur lors de la seconde période pour qu'elle soit inférieure à la fréquence de commutation d'au moins certains éléments de commutation dans l'onduleur lors de la première période.

5. Module photovoltaïque selon l'une quelconque des revendications précédentes, dans lequel l'onduleur (540) comprend :
des premier et deuxième éléments de commutation connectés l'un à l'autre en série ; et
des troisième et quatrième éléments de commutation connectés aux premier et deuxième éléments de commutation en parallèle et connectés l'un à l'autre en série, et
le contrôleur (550) est conçu pour commander les premier et deuxième éléments de commutation pour qu'ils effectuent une deuxième commutation de vitesse plus que les troisième et quatrième des éléments de commutation, et pour commander une fréquence de commutation des premier et deuxième éléments de commutation de l'onduleur à changer pendant une période comprenant un point maximum ou un point minimum de la sortie de puissance en CA de l'onduleur.

6. Module photovoltaïque selon la revendication 5, dans lequel le contrôleur (550) est conçu pour commander une fréquence de commutation des troisième et quatrième éléments de commutation pour qu'elle soit identique à une fréquence de réseau.

7. Module photovoltaïque selon la revendication 5 ou 6, dans lequel le contrôleur (550) est conçu pour commander une fréquence de commutation des troisième et quatrième éléments de commutation pour qu'elle soit la même.

8. Module photovoltaïque selon l'une quelconque des revendications 5 à 7, dans lequel les premier élément de commutation au quatrième élément de commutation comprennent un transistor au nitrure de gallium (GaN).

9. Module photovoltaïque selon l'une quelconque des revendications 5 à 8,
dans lequel le contrôleur (550) comprend :
un contrôleur de courant (710) conçu pour émettre une commande de tension de borne CC basée sur un courant de sortie circulant vers l'onduleur ;
un compensateur de commande de tension (720) conçu pour compenser une commande de tension sur la base des tensions aux deux bornes du condensateur de borne CC ;
un premier générateur de signal de commande de commutateur de vitesse (730) conçu pour émettre un premier signal de commande de commutateur de vitesse en fonction de la première fréquence de commutation sur la base d'une valeur de sortie du compensateur de commande de tension ; et
un deuxième générateur de signal de commande de commutateur de vitesse (740) conçu pour émettre un deuxième signal de commande de commutateur de vitesse en fonction de la deuxième fréquence de commutation sur la base d'une sortie du compensateur de commande de tension.

10. Module photovoltaïque selon la revendication 1, dans lequel le contrôleur (550), en mode dévolteur, est conçu pour faire fonctionner l'unité de commutation en pont complet à une fréquence de commutation maximale et change une différence de phase des éléments de commutation dans l'unité de commutation en pont complet.

11. Module photovoltaïque selon la revendication 1 ou 10, dans lequel le contrôleur (550), en mode survolteur, est conçu pour faire fonctionner l'unité de commutation en pont complet à une fréquence de commutation minimale et pour modifier l'obligation de mise en marche des éléments de commutation dans le redresseur synchrone.
